# EUROPEAN PATENT APPLICATION

(11) **EP 0 717 353 A2**
(43) Date of publication of application: **19.06.1996**
(21) Application number: 95308717.8
(22) Date of filing: 01.12.1995
(51) Int. Cl.: G06F 9/44

(54) **Efficient and secure update of software and data**

(30) Priority: 14.12.1994 US 355889
(71) Applicant: AT&T Corp., New York, NY 10013-2412 (US)
(72) Inventor: Korn, David Gerard, New York, New York 10003 (US); Vo, Kiem-Phong, Berkeley Heights, New Jersey 07922 (US)
(74) Representative: Watts, Christopher Malcolm Kelway, Dr.

(57) **Abstract**

The invention concerns apparatus for updating a data file, from an earlier version to a later version. The invention compares the earlier version with a later version, and derives a transformation, which contains information as to the similarities and differences. The invention then processes the earlier version, using the transformation, in order to derive the later version, without reference to the later version itself.

The invention allows multiple versions of an original file, such as bank records located at multiple locations, to be updated by transmitting the transformation to the multiple locations, instead of transmitting the updated files themselves. The procedure is highly resistant to interception of the updated data, because the transformation, in general, does not contain the entire contents of the later versions.

## Description

An APPENDIX is attached which contains source code used by the invention. The invention concerns a method for remotely updating software or data, or both, which reduces the amount of data transmitted, and is less susceptible to interception.

### Background of The Invention

Electronic data transmission between computers via a common-carrier telephone system requires speed and security. Transmission speed can be enhanced by compressing the data before transmission, while security can be protected using encryption. Data compression is also beneficial for encryption because it reduces redundancy in the data source, and increases resistance to cracking attempts.

However, if a data file is compressed and encrypted, the resulting compressed-and-encrypted data is based on a single source. Data compression and encryption based on single data sources are not perfect. Unless great redundancy exists in the data, compression does not perform well, and high-speed computers working together with modern crypto-analytic methods can crack most encrypted data.

In many situations, multiple later versions of an initial data source are frequently transmitted after slight changes in the data. The fact that the changes are slight means that all versions are inherently similar. The inherent similarity can be exploited to compute a minimal transformation that transforms one version into another.

This process of computing such a transformation is called data differencing. Data differencing enhances transmission speed because it reduces the amount of data to be communicated. It also enhances privacy because a snooper without the earlier version cannot deduce too much information from the transmitted data.

A number of compression and differencing techniques have been previously considered. The article "A Universal Algorithm for Sequential Data Compression," by J. Ziv and A. Lempel, contained in IEEE Transactions on Information Theory, 23(3): pp. 337 - 343, May, 1977, describes a technique to compress a single data file. This works by analyzing a data sequence and, at each position, if possible, identifying the longest segment that matches another segment in the already analyzed part. Such a segment, if found, is encoded using the matching position and the length of the match. Unmatched data are output as-is.

An implementation of this algorithm was the subject of U.S. Patent number 4,464,650, August 7, 1984, by W.L. Eastman, A. Lempel, and J. Ziv. The Eastman-Lempel-Ziv compression method is slow on de-compression because it has to do roughly the same amount of work during de-compression as during compression. It also does not apply to data differencing.

On UNIX systems, differences between text (not binary) files can be computed using the program "diff," which produces a set of lines that must be deleted or added to transform the first file to the second. The "diff" approach can produce very large transformations because small changes in text lines cause them to be considered different. Further, it only works on text files, so it has a limited range of applicability.

The article "The String-to-String Correction Problem with Block Moves," by Walter F. Tichy, contained in ACM Transactions on Computer Systems, 2(4): pp. 309 - 321, November, 1984, describes an algorithm to compute a set of instructions called block-moves to transform one version of a data file to another. A block-move is a data segment in the second version that matches another segment in the first version. This algorithm is essentially unrealized and does not take advantage of any redundancy inherent in the second version to minimize the transformation needed to construct the second version from the first version.

### Summary of The Invention

In one form of the invention, a computer program compares a first and a second, later, version of a file, and produces a sequence of instructions. The instructions allow replication of the second version, based on the first version.

The instructions are of two types: One type is a COPY instruction, which orders copying of a specified sequence of characters into a file being constructed. The specified sequence can reside either in the first version, or in the file under construction.

The second type is an ADD instruction, which orders addition of a sequence of characters, which accompanies the ADD instruction. When the instructions are executed in sequence, they produce a concatenation of sequences, which are COPIED and ADDED, producing a replica of the second version.

### Brief Description of The Drawings

Figure 1 is a schematic of how the invention is used for data communication between computers.

Figures 1A through 1I explain, by analogy, principles used by the invention.

Figure 1J illustrates a security aspect of the invention.

Figure 2 gives an example of two versions of a data set and a set of instructions to transform one of the versions to the other.

Figures 2A through 2E illustrate operation of the procedure described in Figure 3.

Figures 2F through 2H illustrate operation of the procedure described in Figure 5.

Figure 3 describes the decoding procedure in a pseudo-C language.

Figure 4 shows the actual encoding of the instructions of FIgure 2.

Figure 5 describes the encoding procedure.

Figure 6 describes the INSERT procedure used in Figure 5.

Figure 7 describes the SEARCH procedure used in Figure 5.

Figure 8 describes the EXTEND procedure used in Figure 5.

Figure 9 shows the inserted positions of the example VERSION1 and VERSION2 data of Figure 2.

Figure 10 shows the secure version of the coded instructions of Figure 4.

### Detailed Description of The Invention

A simplified analogy will explain some of the more fundamental aspects of the invention. A technical explanation of computer code which implements part of the invention is given later, beginning in the section entitled "The Invention".

### Analogy

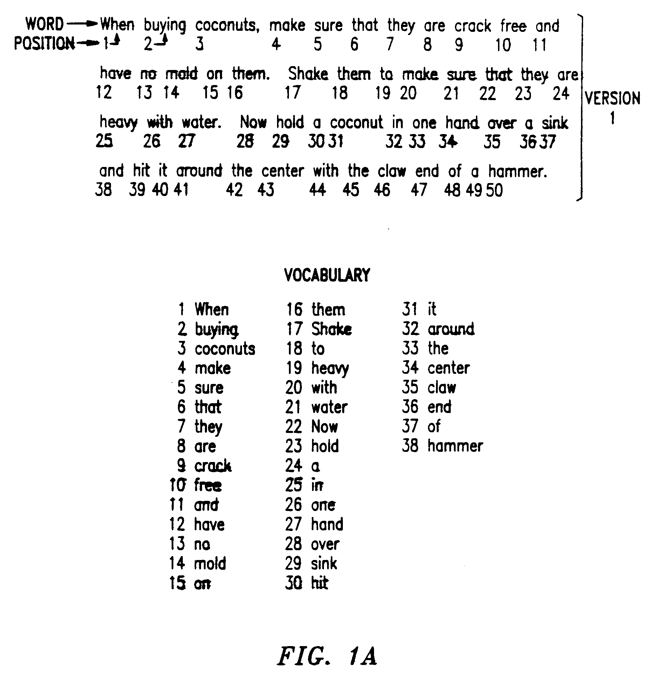

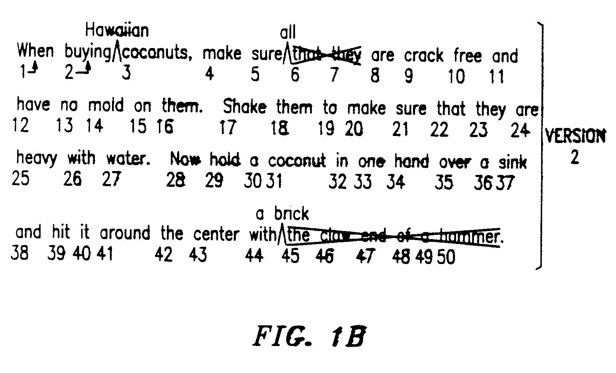

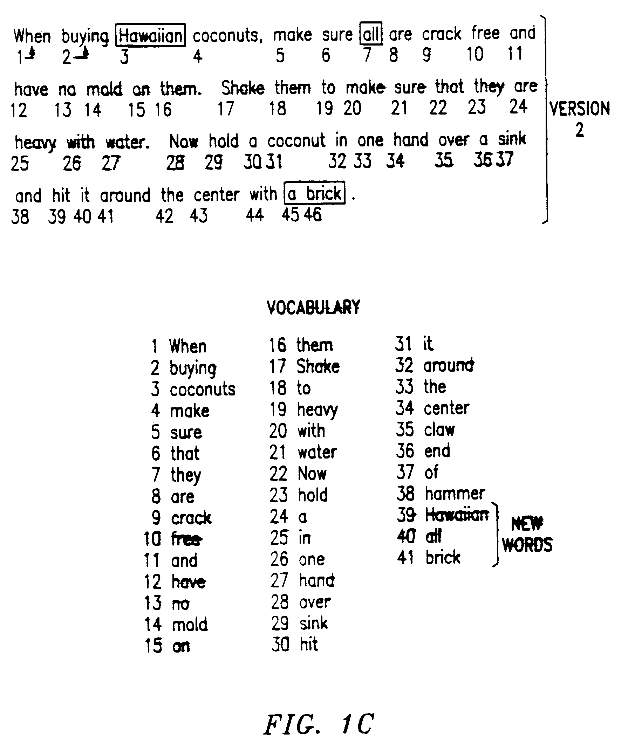

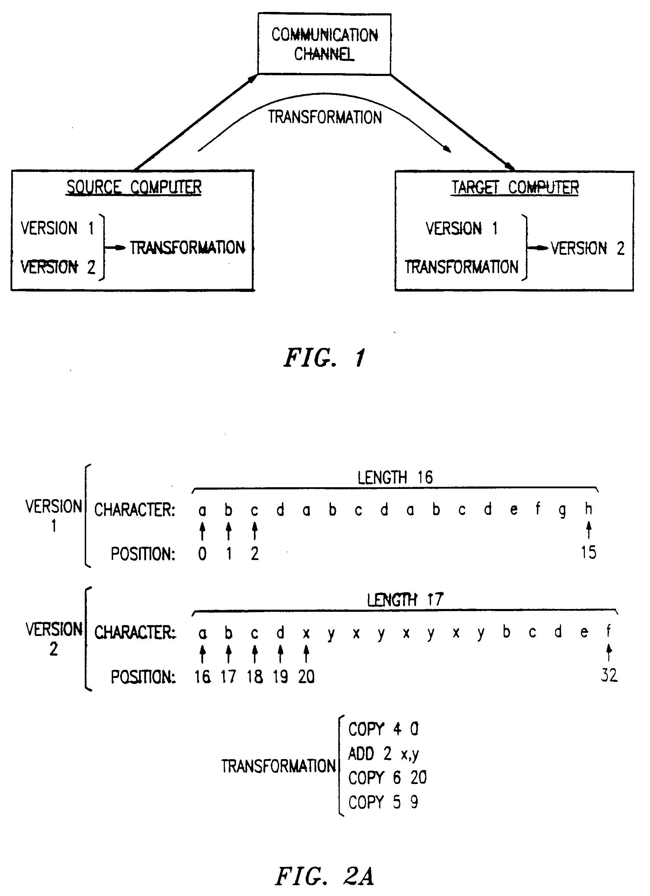

Assume that a newspaper reporter and a newspaper editor are writing an article together, but at different locations. Assume that they both have written VERSION 1, which is shown in Figure 1A. Assume that the reporter has made the changes shown in Figure 1B, resulting in VERSION 2, which is shown in Figure 1C (the boxes indicate the locations of changes), and wishes to send this version to the editor. The following procedure will allow the reporter to send VERSION 2 to the editor, but without sending the entire contents of VERSION 2.

### Procedure

First, the reporter assigns a position to each word in VERSION 1, as indicated in Figure 1A. There are 50 positions, corresponding to the 50 words.

Second, the reporter ascertains the vocabulary of VERSION 1. The vocabulary is a list, or table, of the words used, as indicated in Figure 1A. Note that each word appears in the vocabulary only once. For example, the word "them" at position 18 is not entered into the vocabulary, because this word previously appeared, at position 16.

In order to assure that each word appears only once, the reporter, as each word is entered, checks to see whether that word already exists in the table. For example, the reporter enters the first word, "when." Then, the reporter takes the word at position 2, "buying," and checks it against the first word in the vocabulary, namely, "when". There is no match, so the reporter enters "buying" into position 2 in the vocabulary.

The reporter proceeds in this manner until the word "them" is reached at position 18. When checking this word against the previous 17 entries in the vocabulary, the reporter finds that "them" matches "them" at position 16 in the vocabulary. Consequently, the latter "them" is not entered into the vocabulary, because it would duplicate the previous "them."

When the last word in VERSION 1 is checked for matches, the vocabulary becomes complete. VERSION 1, which is 50 words in overall length, contains only 38 different words, as indicated by the length of the vocabulary.

Next, the reporter establishes a vocabulary for VERSION 2, as shown in Figure 1C. VERSION 2 has the same vocabulary as VERSION 1, with the exception of three additional words, indicated as NEW WORDS. Now the reporter is ready to transmit VERSION 2 to the editor.

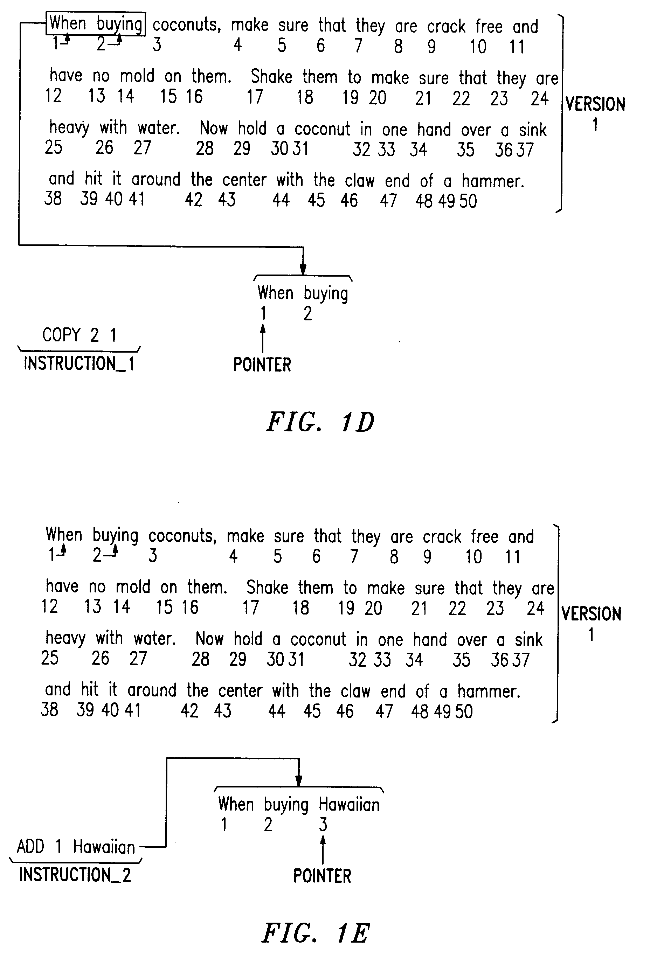

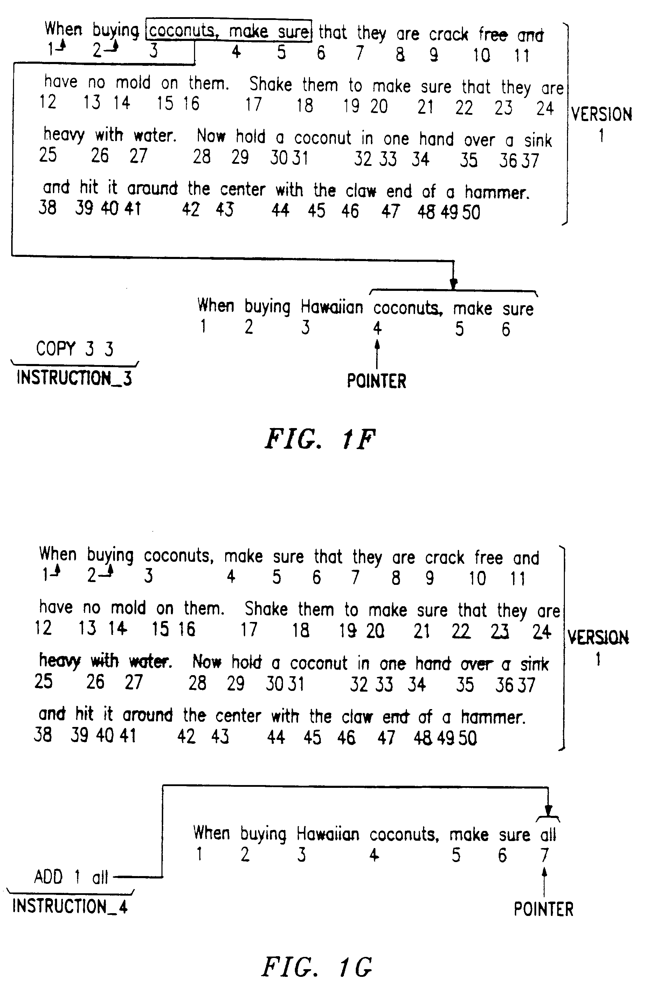

The reporter transmits VERSION 2 by transmitting the following six messages, or instructions, each of which will be explained by a respective Figure in Figures 1D - 1I:
1. COPY 2 1
2. ADD 1 Hawaiian
3. COPY 3 3
4. ADD 1 all
5. COPY 37 8
6. ADD 2 a brick.

### Instruction 1

By pre-arrangement, the reporter and the editor set a POINTER at position 1, as indicated in Figure 1D. The first instruction, "COPY 2 1" means "COPY the sequence of 2 words which begin at position 1 in VERSION 1." (In each instruction, it is implicit that the words are placed at the POINTER in VERSION 2.) This operation is shown in Figure 1D.

Note that the syntax is
COPY [number of words, starting position in VERSION 1].

After following the instruction, the editor moves the POINTER by the "number of words" in the COPY instruction, which, in this case, is 2. The POINTER is now located as shown in Figure 1E.

### Instruction 2

Instruction 2 states "ADD 1 Hawaiian," which means "ADD the one word 'Hawaiian'." This operation is shown in Figure 1E. Note that the syntax is
ADD [number of words, words themselves].

After following the instruction, the editor moves the POINTER by the "number of words" in the ADD instruction, which, in this case, is 1. The POINTER is now located as shown in Figure 1F.

### Instruction 3

The third instruction, "COPY 3 3" means "COPY the sequence of 3 words which begin at position 3 in VERSION 1." This operation is shown in Figure 1F. Note that the syntax is identical to that of instruction 1.

After following the instruction, the editor moves the POINTER by the "number of words" in the copy instruction, which, in this case, is 3. The POINTER is now located as shown in Figure 1G.

### Instruction 4

Instruction 4 states "ADD 1 all," which means "ADD the one word 'all'." This operation is shown in Figure 1G.

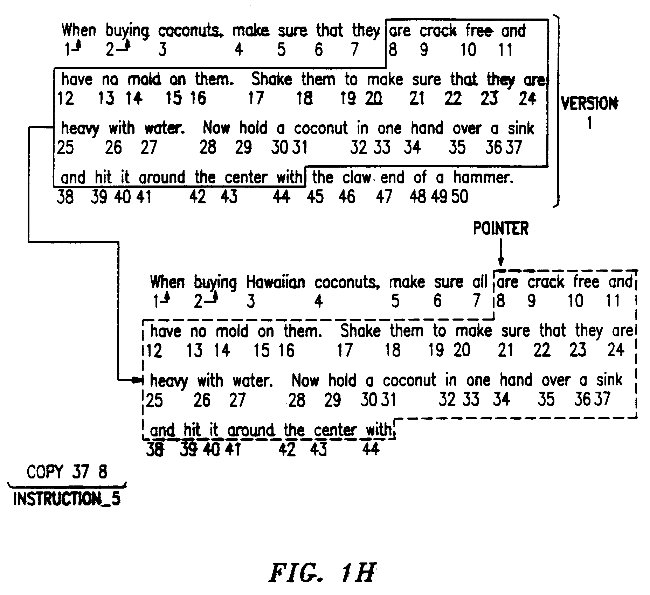

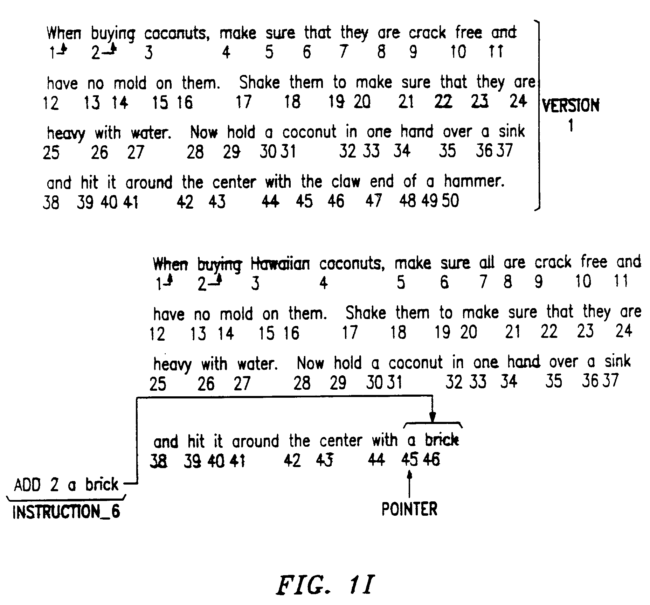

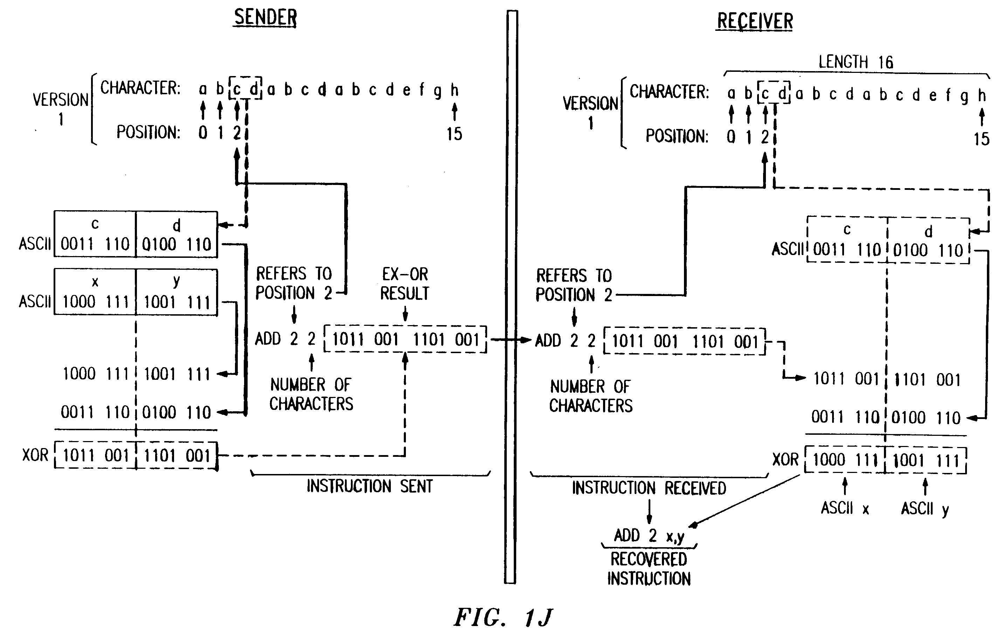

After following the instruction, the editor moves the POINTER by the "number of words" in the ADD instruction, which, in this case, is 1. The POINTER is now located as shown in Figure 1H.

### Instruction 5

The fifth instruction, "COPY 37 8" means "COPY the sequence of 37 words which begin at position 8 in VERSION 1." This operation is shown in Figure 1H. Note that the syntax is identical to that of instruction 1.

After following the instruction, the editor moves the POINTER by the "number of words" in the copy instruction, which, in this case, is 37. The POINTER is now located as shown in Figure 1I.

### Instruction 6

Instruction 4 states "ADD 2 a brick," which means "ADD the 2 words 'a brick'." This operation is shown in Figure 1I. Now VERSION 2 has been constructed.

### Significant Features

VERSION 2, shown in Figure 1C, contained 43 words, which themselves contained 163 characters. However, the set of six instructions contained 27 characters, plus the instructions themselves (ie, COPY and ADD). If each instruction and each character is encoded as one byte, then the total message equals 27 + 6 characters, or 33 characters. Transmitting 33 characters takes a significantly shorter time than transmitting 163 characters.

### The Invention

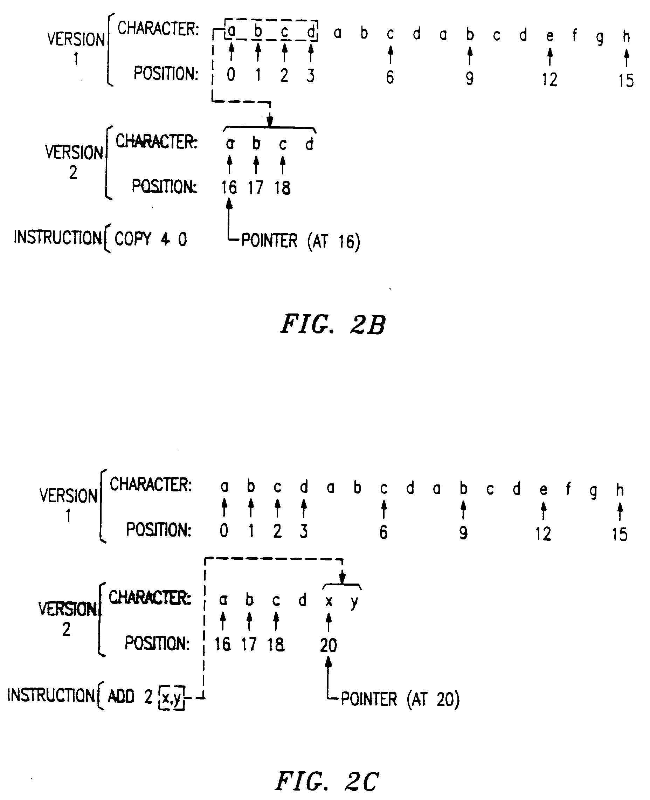

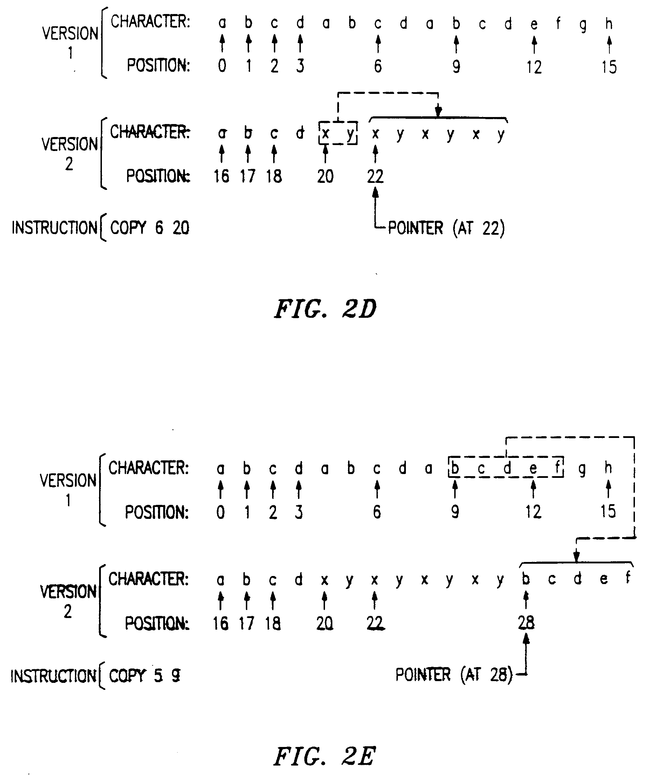

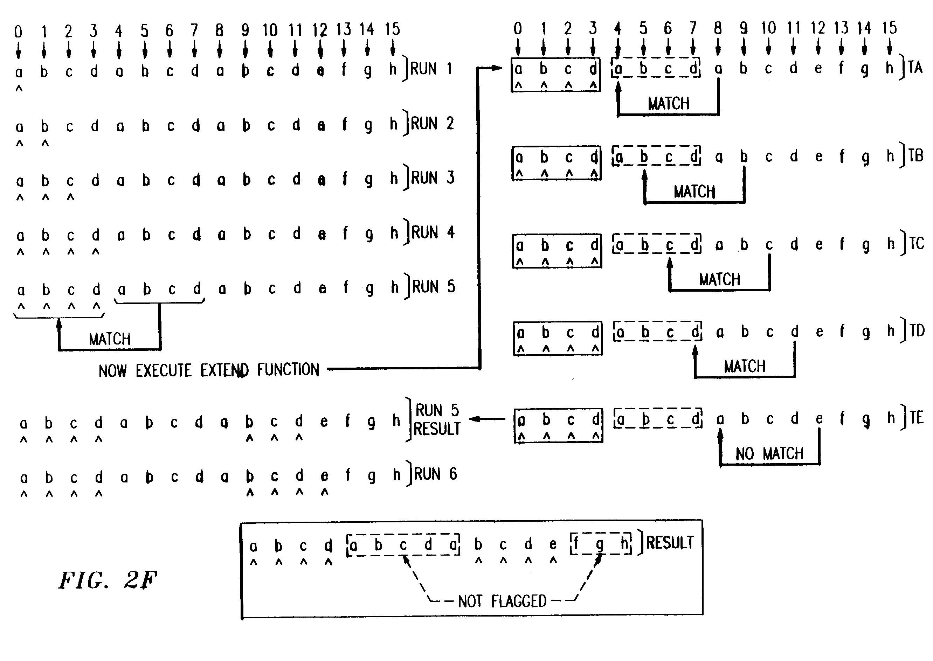

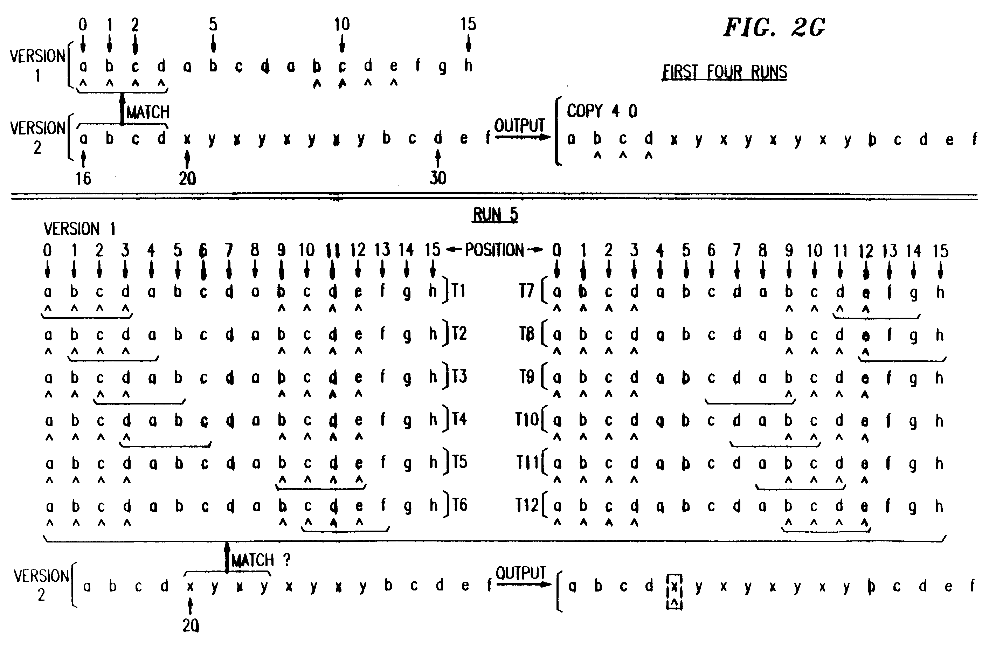

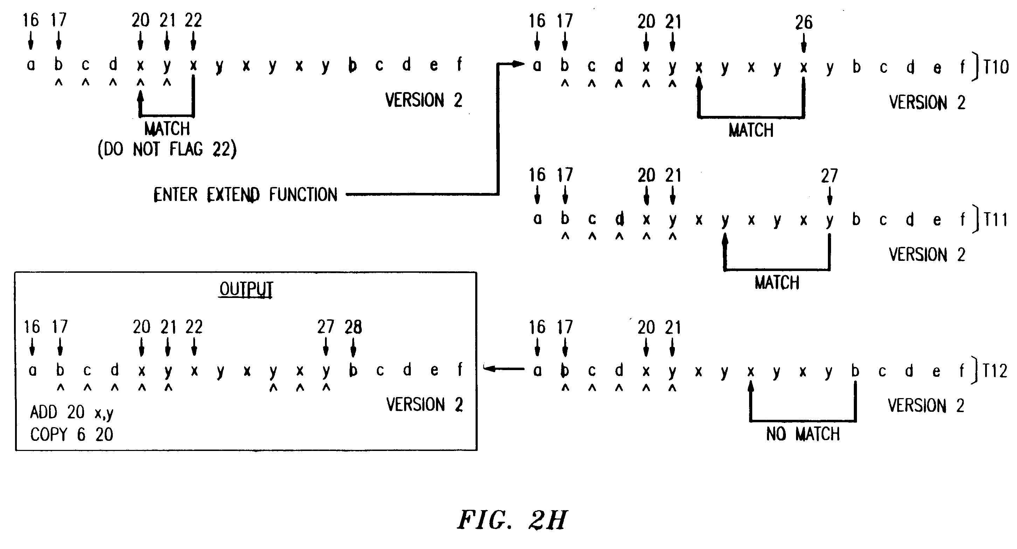

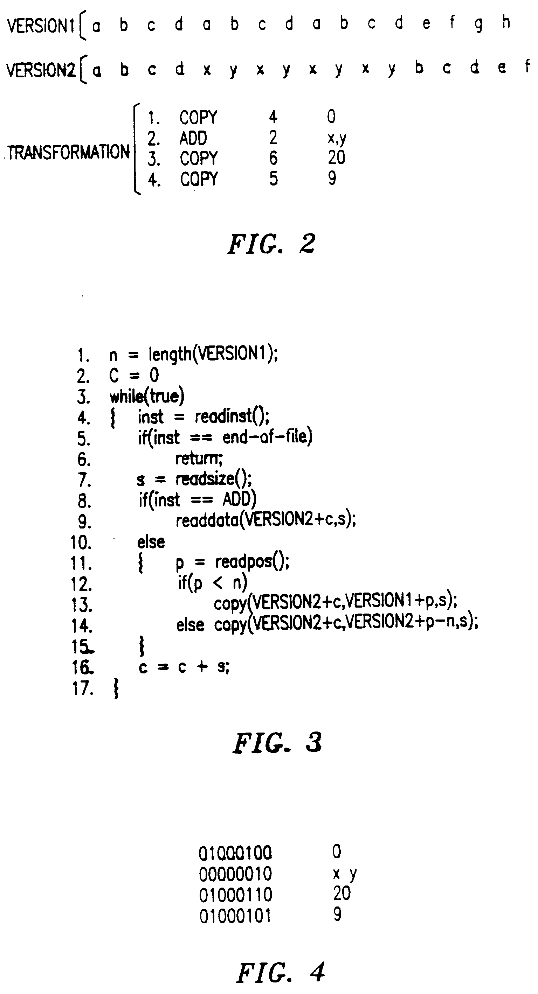

The previous analogy was a simplification, and does not illustrate all of the features of the invention. Figure 2 illustrates two VERSIONs of a file, together with a TRANSFORMATION, which allows construction of VERSION2 from the combination of VERSION1 and the TRANSFORMATION itself. The procedure shown in Figure 3 accomplishes the reconstruction, and will now be explained. First, the general pattern will be elaborated.

As background, four important points should be recognized. One, each character in each VERSION occupies a numbered position, as shown in Figure 2A. For example, in VERSION 1, the first "a" occupies position 0. The first "b" occupies position 1, and so on.

Two, the numbered positions in VERSION 2 begin after the highest-numbered position in VERSION 1. Thus, since the highest position in VERSION 1 is "15," VERSION 2 begins with "16."

Three, a pointer (which is a variable in the procedure of Figure 3) indicates a current position, as indicated in Figure 2A.

Four, the TRANSFORMATION contains instructions. There are two types of instruction, namely, ADD and COPY. The operation of these two instructions will be explained by showing how VERSION 2 is constructed from VERSION 1.

### Instruction 1

In Figure 2B, instruction 1 of the TRANSFORMATION is executed. This instruction, "COPY 4 0," states, in effect, "COPY the FOUR characters beginning at position ZERO in VERSION 1 to the pointer in VERSION 2." (The underlined words refer to the words in the instruction: FOUR refers to 4, and so on.) Figure 2B illustrates the operation.

It is significant that,' in this instruction, the characters used to generate VERSION 2 are obtained from VERSION 1, not from the instruction itself. Thus, if the instruction were obtained via a telephone transmission, an eavesdropper would obtain no information usable in constructing VERSION 2 because the eavesdropper is presumed to have no access to VERSION 1.

The syntax is
COPY [number of characters, starting position]

### Instruction 2

In Figure 2C, instruction 2 is executed. This instruction, "ADD 2 x,y," states, in effect, "ADD the TWO characters x and y to VERSION 2, beginning at the pointer."

It is significant that, in this instruction, the characters used to generate VERSION 2 are obtained from the instruction itself. Consequently, an eavesdropper does obtain some information about VERSION 2. However, in practice, this type of instruction is expected to be intermixed with so many types of COPY instructions (which contain no information) that the eavesdropper would obtain no significant information about VERSION 2.

Nevertheless, it is possible, in theory, that the TRANSFORMATION may contain ADD instructions exclusively, in which case the eavesdropper would obtain VERSION 2 in its entirety. Or the number of ADD instructions may be very large. To prevent an eavesdropper from obtaining information from these ADD instructions, an encryption option is provided, which is discussed later.

The syntax is of the ADD instruction is
ADD [number of characters, characters themselves]

### Instruction 3

In Figure 2D, instruction 3 is executed. This instruction, "COPY 6 20", in effect, states:
generate a COPY, which is six characters long, using the characters residing between position TWENTY and the pointer, and place them at the pointer.
The result is the sequence xyxyxy, as indicated.

(As another example, if the COPY statement read "COPY 6 19", then it, in effect, would have stated
generate a COPY, which is six characters long, using the characters residing between position NINETEEN (not TWENTY) and the pointer, and place them at the pointer.

The sequence added at the pointer would have been dxydxy, because the sequence residing between position nineteen and the pointer is dxy.)

It is significant that, in this instruction, the characters used to generate VERSION 2 are obtained from VERSION 2 itself. Thus, it is now seen that the COPY instruction uses two sources, depending on the address specified. In this instruction, the address (ie, the "20" in "COPY 6 20") indicates VERSION 2 (ie, the address is greater than 15). VERSION 2 is the source for this command.

In contrast, if the address were 15 or less, then VERSION 1 would have been used as the source.

This approach, in effect, allows one to expand the vocabulary, using ADD instructions. Then, when VERSION 2 is found to contain characters which are (a) not in VERSION 1, but (b) contained in the expanded vocabulary (because added earlier), a COPY instruction can be used. The COPY instruction has two benefits.

One is that a COPY instruction can insert a large number of characters, merely by indicating their total number, and starting position. In contrast, the ADD instruction requires the characters themselves to be transmitted, which entails a longer transmission.

A second is that, as discussed above, the COPY instruction contains no information, unless an interceptor of the instruction also happens to possess VERSION 1.

### Instruction 4

In Figure 2E, instruction 4 is executed. This instruction, "COPY 5 9," in effect, states: "COPY the FIVE characters beginning at position NINE in VERSION 1." This instruction resembles instruction 1.

### Reference to Process of Figure 3

Figure 3 illustrates a process by which a computer can construct VERSION 2 from the combination of VERSION 1 and the TRANSFORMATION.

In Figure 3, line 2 initializes a variable c, which is used to compute the pointer shown in Figures 2B - 2E. The pointer is computed in lines 9, 13, and 14, as appropriate.

### Instruction 1

Instruction 1 (COPY 4 0) of the TRANSFORMATION shown in Figure 2 is executed in line 13 in Figure 3. The variable "p" indicates the starting position of the source data, is obtained from the instruction, and equals 0. Since "p" is less than "n" (line 12), the source lies in VERSION 1. Consequently, line 13 is executed, because of the IF-statement, and the data is copied from VERSION 1, beginning at position VERSION1+p, which is position 0. The variable "s" indicates the number of characters, is obtained from the instruction in line 7, and equals 4.

The pointer is updated on line 16.

### Instruction 2

Instruction 2 (ADD 2 x,y) is executed on line 9, because of the IF-statement on line 8. It places a sequence of characters, which is of length "s" (which equals 2) at the location VERSION2 + c. The pointer is updated on line 16.

### Instruction 3

Instruction 3 (COPY 6 20) is executed on line 14, because of line 12: "p" (obtained from the instruction, and which equals 20) is less than "n." The copy function uses VERSION2 as the source, beginning at VERSION2 + c. The copy function takes a sequence which is s characters long. (The variable "s" is obtained from pointer-minus-20. The "20" is obtained from the instruction.)

### Instruction 4

Instruction 4 is executed on line 13, like instruction 1.

### Generation of TRANSFORMATION

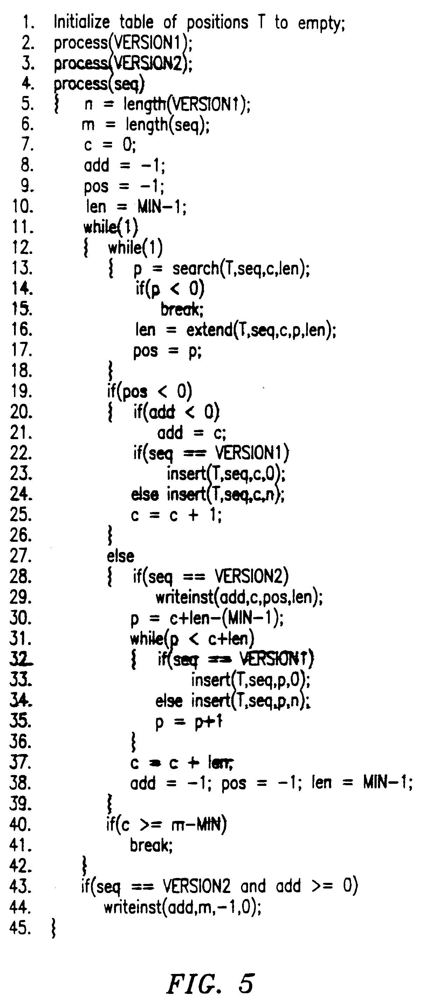

Figure 5 contains a procedure which examines each VERSION, character-by-character, and generates the set of instructions which allows construction of VERSION 2 from the combination of VERSION 1 and the instructions, which are called a transformation. The transformation of Figure 2 was discussed above. The general approach taken by this procedure is the following.

### Run 1

VERSION 1 is processed first. VERSION 1 is shown at several locations in Figure 2F. The code of Figure 5 asks whether the four-character sequence beginning at position 0 matches a four character sequence beginning at a previous position. Of course, since nothing exists prior to position 0, the answer is No. Thus, position 0 is flagged with a carat, as indicated in the row labeled RUN 1.

### Run 2

On the second run, the code asks a similar question, namely, whether the four-character sequence beginning at position 1 matches a four-character sequence beginning at a previous position. The answer is No, and a flag is placed at position 1.

### Runs 3 and 4

In a similar way, flags are placed at positions 2 and 3, resulting in the flagging shown at RUN 4 in Figure 2F.

### Run 5

Run 5 produces different results. In RUN 5, the code asks the usual question, Does the four-character sequence beginning at position 4 match a four-character sequence beginning at a previous position ? The answer is Yes, at position 0, as indicated in the row labeled RUN 5. Position 4 is not flagged, and the EXTEND function (line 16, Figure 5) is called into action.

The EXTEND function asks how long the match extends. It asks whether the next position after the matched block (the matched block occupies positions 4 - 7, so the next is position 8) has a match located four positions earlier. The answer is Yes, as indicated in trial TA.

It then asks whether the second position after the matched block, position 9, has a match located four positions earlier. The answer is again Yes, as indicated by trial TB. This inquiry continues until a position is reached, in trial TE, where no such match is found.

The EXTEND function has thus ascertained that the match extends for eight positions, from position 4 through position 11. Because of the logic of the code, the last three positions of the extended match are flagged, namely, the "BCD" located in "RUN 5 RESULT."

### Run 6

Run 6 asks whether the four-character sequence beginning at position 12 (ie, the rightmost "e") matches any four-character sequence beginning at a position occurring previously. The answer is No, and a flag is placed at position 12, as indicated in the row labeled RUN 6.

### Results

The results are shown at the bottom of Figure 2F, and labeled RESULT. Two important features are the following:
One, as will be later explained, the flags indicate not only the beginnings, but also the endings, of possible sequences which are used to construct VERSION 2.

Two, there are regions which are not flagged, as indicated. A search for sequence to use in constructing VERSION 2 never begins in these regions, although the search can begin outside these regions, and then invade the region. Thus, since initial search points are eliminated, the overall searching time is reduced.

### Processing of VERSION 2

### First Four Runs

VERSION 2, the updated version, is processed next. The code asks whether the four-character sequences beginning at positions 16, 17, 18, and 19, shown in Figure 2G, have matches which begin at previous positions. The four-character sequence beginning at position 16 matches with that beginning at 0, but the latter three do not, so positions 17, 18, and 19 are flagged, as indicated at the top of Figure 2G.

The EXTEND function finds no extended match. The code of Figure 5 jumps to line 29, where it issues the "COPY 4 0" instruction, which was explained above, and appears in Figure 2.

The overall results are indicated by the arrow labeled OUTPUT. Three characters have been flagged, and a COPY instruction has been issued. It is important to note that these flagged characters are later treated as search initialization points, just as are the flagged characters in VERSION 1.

### Run 5

The code of Figure 5 asks whether the four-character sequence "xyxy", beginning at position 20 (which resides in VERSION 2, shown in Figure 2G, in the section labeled RUN 5), has a match which begins at a previous position. The code searches, starting at each flag, including those now existing in VERSION 2.

Further, at each flag, the code searches both forward and backward. (This forward-backward searching was not mentioned previously, for simplicity.) The overall searching is indicated by RUN 5 in Figure 2G. Because the searching (a) starts with each flag and (b) searches for four characters, both forward and backward, every four-character sequence of trial T1 through T12 is examined. In addition, similar searching is done, starting with the flagged positions in VERSION 2, namely, positions 17, 18, 19, and 20.

No match is found, so the "x" at position 20 is flagged.

### Run 6

The code of Figure 5 asks whether the four-character sequence "yxyx", beginning at position 21 (which resides in VERSION 2), has a match which begins at a previous position. As for position 20, the code searches, forward and backward, beginning at each flag, including those in VERSION 2. No match is found, so position 21 is flagged. The current flagging is indicated at the upper right part of Figure 2H.

### Run 7

The code of Figure 5 asks whether the four-character sequence "xyxy", beginning at position 22 (which resides in VERSION 2), has a match which begins at a previous position. The answer is Yes, at position 20. Thus, position 22 is not flagged, as indicated in Figure 2H, and the EXTEND function (line 16 of Figure 5) is entered.

The EXTEND function determines, in the manner described in connection with Figure 2F, that the match extends through position 27 in Figure 2H. Consequently, the last three positions of the extended match are flagged, resulting in the flagging shown in the box at the lower left of the Figure.

At this time, the logic proceeds to line 29 of Figure 5, wherein the two instructions "ADD 2 x,y" and "COPY 6 20" are issued. (The arguments "add" and "c" in line 29 refer to the ADD instruction. The arguments "pos" and "len" refer to the COPY instruction.)

### Run 8

The code asks whether the sequence "bcde", beginning at position 28 (See OUTPUT box in Figure 2I), has a match beginning at a previous position. The answer is Yes, at position 9 in VERSION 1 (see Figure 2G, upper left). Now the EXTEND function is called, which determines that the match extends to an additional character, the "f".

The code, at line 29, then issues the instruction "COPY 5 9". The four instructions of Figure 2 have been generated. VERSION 2 can now be reconstructed from VERSION 1, plus the instructions.

### Characterization

The preceding overview illustrates the following principles:
ONE, once it is determined that a position represents a previously matched sequence, that position is not flagged, and consequently, subsequent searches are not initiated at that position, because such initiation would be redundant. Thus, a reduced set of searching positions is obtained (if possible).

TWO, VERSION 2 is constructed from two types of sources, namely, (a) sequences copied from either VERSION 1 or VERSION 2 and (b) sequences ADDED to VERSION 2. Further, the ADDED sequences can be used later, in copying operations.

From another point of view, if a first user possesses VERSION 1, and if a second user possesses both VERSION 1 and VERSION 2, the first user can construct a replica of VERSION 2, if the second user identifies the following sequences of characters:
(a) those to be copied from the first user's VERSION 1, (b) those to be added to first user's VERSION 1, and
(c) those to be copied from the first user's replica of VERSION 2.

THREE, each flagged position represents the starting point of a possible vocabulary word. Analogous words are shown in Figure 1A. However, unlike the vocabulary of Figure 1A, the vocabulary of each flagged position represents numerous possible sequences.

For example, assume VERSION 1 is the following:
a b c d e F g h i j k.
If the upper-case F (position 6) is flagged, then it can represent the following sequences:
f fg fgh fghi fghij fghijk.
These sequences can contain other flagged positions.

Therefore, a single flagged position can represent multiple sequences for copying into VERSION 2. Thus, this flagged position can appear in multiple COPY instructions. For instance, "COPY 3 6" means COPY "fgh." "COPY 5" means COPY "fghij".

### Security Aspects

As mentioned above, the ADD instructions contain information as to the content of VERSION 2, and this information may need security protection. One approach to security is shown in Figure 1J.

The ADD instruction of Figure 2 ("ADD 2 x,y"), which is sent, is modified to contain a pointer to a location within VERSION 1. This modified instruction is labeled INSTRUCTION SENT in Figure 1J. This pointer is "2", which indicates the "c".

The information sent (ie, the bytes representing "x" and "y") is then EX-ORed with the data beginning with the "c". Figure 1J, left side, indicates the EX-OR operation. The instruction sent is "ADD 2 2" plus the result of the EX-OR operation. This EX-OR result contains no information of value to an eavesdropper, because the eavesdropper has no access to VERSION 1.

The data contained in the received instruction, indicated on the right side of Figure 1K, is EX-ORed with the same data in VERSION 1, namely, that which begins with the "c". This EX-ORing recovers the original data, namely "x,y".

This procedure exploits a property of the EX-OR operation, namely, that EX-ORing a first word with a second word produces a third word. ED-ORing the third word with the second recovers the first.

Thus, from the transmitted instruction, which is
ADD 2 2 [EX-OR result],
one obtains
ADD 2 x,y,
which is the intended instruction.

### Important Considerations

1. The order in which the COPY and ADD instructions occur is, of course, important. If they are scrambled as to order, a different VERSION 2 will be obtained.
   From another perspective, the sequence itself is a type of information. The sequence can be viewed as a permutation of the instructions. The permutation contains information, just as permutations of the English alphabet create words, which convey information.
   Of course, the instructions could be transmitted in a scrambled order, if information is included which allows reconstruction of the sequence. For example, each instruction could be numbered.
   Irrespective of how execution of the proper sequence of instructions is attained, the execution produces a replica of VERSION 2, by a concatenation process. That is, returning to the example of Figures 2B through 2E:
   1. First "abcd" is written into the replica (Figure 2B). "abcd" is taken from VERSION 1.
   2. Then "xy" is concatenated (Figure 2C). "xy" is obtained from VERSION 1.
   3. Then "xyxyxy" is concatenated (Figure 2D). "xyxyxy" is obtained from VERSION 2. (Alternately, four pairs of "xy" could have been taken from VERSION 1 and concatenated in step 2. This would be less efficient, however.)
   4. Then "bcdef" is concatenated (Figure 2E). "bcdef " is obtained from VERSION 1.
2. Further regarding Consideration Number 1, above, the Inventors point out that each COPY and ADD instruction contains the length of the passage to be COPIED or ADDED. Thus, for any given COPY or ADD instruction, the address within VERSION 2 where the COPYING or ADDING occurs can be readily computed, based on the total preceding lengths. (The code of Figure 3 illustrates this, because the pointer is computed based on these lengths.)
3. The invention can be used to update any type of data file. It is not limited to text files, or to files of other specific types. It can handle binary files generally.
   Files contain characters. Each character is commonly represented by a byte of data. Since a byte contains eight bits, 2⁸, or 256, possible characters can be represented by one byte.
   In "text" files, all of these possible combinations are not used. Only those representing alphanumerics, and some punctuation, are used.
   In "binary" files, all possible 256 combinations are used. The invention can handle binary files. In contrast, differencing programs of the prior art can handle only text files.
4. The invention is not limited to remote replication of VERSION 2 from a stored VERSION 1. In addition, a later version of a program can be stored at a single location, by using the ADD and COPY instructions, rather than storing the version in its entirety. This approach will save storage space. When a version is desired to be reconstructed, the program of Figure 3 is executed.
5. It is not necessary that the version of a file which is reconstructed be the actual, chronologically later version of an earlier file. For example, VERSION 1 can be reconstructed from VERSION 2.

### Technical Discussion

A more technical discussion of the code given in Figures 3 and 5 will now be given.

### Overview

A data file can be considered as a sequence of bytes. On virtually all current computers, a byte is the smallest natural unit that can be compressed efficiently in terms of storage, communication, and in-memory data manipulation. Though the term "data file" often refers to a file when stored on-disk, the present invention also allows such a sequence of bytes to be some segment of main memory.

Figure 1 shows an example of using the present invention to keep data in synchronization between two computers. First, on the source computer, the two versions of the data, VERSION1 and VERSION2, are compared to produce a transformation that takes VERSION1 to VERSION2. This transformation is transmitted via some communications channel to the target computer. Then, on the target computer, the transformation and the local copy of VERSION1 are used to reconstruct VERSION2.

### Coding and Decoding Transformation Instructions

The transformation computed by the present invention consists of a sequence of two types of instructions, COPY and ADD. During the reconstruction of VERSION2, the COPY instruction defines the position and length of some existing segment of data to be copied while the ADD instruction defines a segment of data to be added. Figure 2 shows an example of two data files in which VERSION1 consists of the sequence of bytes "abc dab cda bcd efgh" (spaces are added here for readability). VERSION2 consists of the sequence "abc dxy xyx yxy bcdef." Thus, VERSION1 has length 16, and VERSION2 has length 17. The transform shown in Figure 2 shows the instructions needed to reconstruct VERSION2 from VERSION1. Note that we use the convention that positions in VERSION1 are coded starting from 0, while positions in VERSION2 are coded starting from the length of VERSION1. For example, the third instruction of the transform in Figure 2 is a COPY instruction that copies 6 bytes starting from position 4 of VERSION2, which is coded as 20.

Figure 3 shows the procedure of how the reconstruction of a version is carried out in general. Line 1 initializes the variable "n" to the length of VERSION1. Line 2 sets the current position "c" in VERSION2 to zero. Line 3 starts a loop that is terminated on line 6 after the end-of-file condition is detected in line 5. Line 4 calls the function readinst() to read an instruction. Line 7 reads the copying size or the data size using the function readsize(). Lines 8 and 9 check to see if the instruction is an ADD instruction and, if so, reads the data into VERSION2 starting at the current position c. Lines 10 to 15 process a COPY instruction by reading in the position code, then performing the copy operation either from VERSION1 or VERSION2, as appropriate. Line 16 increases the current copy position in VERSION2 by the length of the newly reconstructed data. The copy() function is a simple function to copy data from one area of disk memory (or main memory) to another. However, the readinst(), readsize(), readpos(), and readdata() functions must be defined, based on some concrete definitions of how the COPY and ADD instructions and their parameters are encoded.

Applying the procedure of Figure 3 to the example of Figure 1, we see that there are four steps in the decoding. The first step copies four bytes "abcd" from VERSION1, starting at position 0. THe second step adds 2 data bytes "xy". The third step copies from VERSION2 6 bytes starting at its position 4 (counting from 0 and coded as 20 by our convention). Note that at the start of this step, only the first 6 bytes "abcdxy" of VERSION2 have been reconstructed as only the two bytes "xy" are available to copy. However, since data is copied from left to right, whenever a byte is to be copied it will have been constructed. The fourth and final step copies the 5 bytes "bcdef " from position 9 of VERSION1.

We now give a description of the encoding of COPY and ADD instructions. This particular embodiment of these instructions are chosen since in the Inventors' experimentation they perform well for many different types of data. GIven the description, the readinst(), readsize(), and readpos() functions above can be straightforwardly implemented. Each instruction is coded starting with a control byte. The eight bits of a control byte are divided into two parts. The first four bits represent numbers from 0 to 15, each of which defines a type of instruction and a coding of some auxiliary information. Below is an enumeration of the first 10 values of the first four bits:
0: an ADD instruction
1,2,3: a COPY instruction with position in the QUICK cache;
4: a COPY instruction with position coded as SELF;
5: a COPY instruction with position coded as difference from HERE;
6,7,8,9: a COPY instruction with position coded from a RECENT cache.

The QUICK cache is an array of size 768 (3 x 256). Each index of this array contains the value p of the position of a recent COPY instruction such that p modulo 768 is the array index. This cache is updated after each COPY instruction is output (during coding) or processed (during decoding). A COPY instruction of type 1, 2, or 3 will be immediately followed by a byte whose value is from 0 to 255 that must be added to 0, 256, or 512, respectively, to compute the array index where the actual position is stored.

A COPY instruction of type 4 has the copying position coded as a sequence of bytes.

A COPY instruction of type 5 has the difference between the copying position and the current position coded as a sequence of bytes.

The RECENT cache is an array having 4 indices, and stores the most recent 4 copying positions. Whenever a COPY instruction is output (during coding) or processed (during decoding), its copying position replaces the oldest position in the cache. A COPY instruction of type 6 (respectively 7, 8, 9) corresponds to cache index 1 (respectively 2, 3, and 4). Its copying position is guaranteed to be larger than the position stored in the corresponding cache index and only the difference is coded.

For the ADD instruction and COPY instruction of type from 1 through 9, the second 4 bits of the control byte, if not zero, code the size of the data involved. If these bits are 0, the respective size is coded as a subsequent sequence of bytes.

It is a result of the encoding method that an ADD instruction is never followed by another ADD instruction. Frequently, an ADD instruction has data size less than or equal to 4, and the following COPY instruction is also small. In such cases, it is advantageous to merge the two instructions into a single control byte. The values from 10 to 15 of the first 4 bits code such merged pairs of instructions. In such a case, the first 2 bits of the second 4 bits in the control byte code the size of the ADD instruction and the remaining 2 bits code the size of the COPY instruction. Below is an enumeration of the values from 10 to 15 of the first 4 bits:
10: a merged ADD/COPY instruction with copy position coded as SELF,
11: a merged ADD/COPY instruction with copy position coded as difference from HERE;
12,13,14,15: a merge ADD/COPY instruction with copy position coded from a RECENT cache.

Figure 4 shows an encoding of the four instructions of the transform shown in Figure 2. For each instruction, all eight bits of the control byte are shown. For example, the first four bits of the second control byte are zero, showing that the byte codes an ADD instruction. The second four bits of the same byte show that the size of the ADD instruction is 2. The two data bytes "xy" come after the control byte. All three COPY instructions are coded using the SELF type, meaning that their copying positions are coded in bytes (with shown values) following the control bytes. The size parameters of all the instructions are small enough so that they can all be encoded inside the control bytes. This small example shows that VERSION2 which is 17 bytes long can be coded in a transformation using only 9 bytes.

### Fast Computation of Matched Segments

Figure 5 shows the method to partition VERSION2 into segments and encode them as COPY and ADD instructions. Note that, for this encoding method, matches of short lengths are not useful because they take up at least as much space to encode as the data that they match. So the matching method can be tuned to ignore short matches. The minimum match length that we use is 4 and represented by the variable MIN in the body of the encoding procedure.

Line 1 of Figure 5 initializes a search table T to empty. For efficiency, T is kept as a hash table with chaining for collisions. This data structure is standard, and is described in any data structure and algorithm textbook, such as pages 111 - 112 in "The Design and Analysis of Computer Algorithms" by A. Aho, J. Hopcroft, and J. Ullman, published by Addison-Wesley, 1974.

Table T contains certain selected positions in the two versions. These positions are inserted with the procedure insert() and used in the procedures search() and extend() for fast searching of longest matched data segments. Lines 2 and 3 call the procedure process() to select positions from VERSION1 and VERSION2 to insert into the table T. COPY and ADD instructions are also generated during the processing of VERSION2.

Lines 4 to 45 define the procedure process(). Lines 5 and 6 initialize the variables "n" and "m" to the length of VERSION1 and the version being processed. Line 7 initializes the curent position "c" of the version being processed to 0. Line 8 initializes the start of data for an ADD instruction to -1 (ie, none). Lines 9 and 10 initialize the position and length of the longest match for the data segment starting at position c Lines 11 to 42 define the main loop that process the given version. Lines 12 to 18 compute a longest, already-processed data segment that matches with the data segment starting at c. The procedure search() called on line 12 finds a match of length len+1. This procedure uses MIN bytes starting at position c+len-(MIN-1) as a key to search for a matching position in the table T. Then it matches backward the data in "seq" and the data in the appropriate version to see if the match covers everything from c to c+len+1.

If such a match is found, the procedure extend() called on line 16 extends the match as far forward as possible. Lines 14 and 15 correspond to the case when there is no match and we break out of the search loop. Otherwise, the loop is repeated to find a longer match. Lines 19 and 26 insert the current unmatched position c into the table T.

Note that the actual value to be inserted is c if seq is VERSION1; otherwise, it is c plus the length of VERSION1 (which is the convention for encoding positions in VERSION2 that we described earlier). The procedure insert(T,seq,p,origin) inserts the coded position p+origin into table T using as its key. MIN bytes starting from position p in version seq.

Lines 20 and 21 set the variable add to c, if it is not yet defined, to indicate that this is the beginning of a segment of unmatched data. Line 25 moves the current position forward by 1 for the next iteration of the processing loop. Lines 27 and 28 correspond to the event of finding a longest matched segment. Lines 28 and 29 call the procedure writeinst() to write out the COPY and ADD instructions according to the description given earlier.

The first two arguments to writeinst() define the data for an ADD instruction if add is zero or positive. The second two arguments define parameters for the COPY instruction. The working of this procedure is straightforward so we shall omit its description. Lines 30 to 36 insert into table T MIN-1 positions at the end of the matched data segment. Lines 37 and 38 increase c by the length of the match, and resets add to -1. Lines 40 and 41 terminate processing if there is not sufficient data to be processed. Lines 43 and 44 output any final unmatched data from VERSION2 as an ADD instruction.

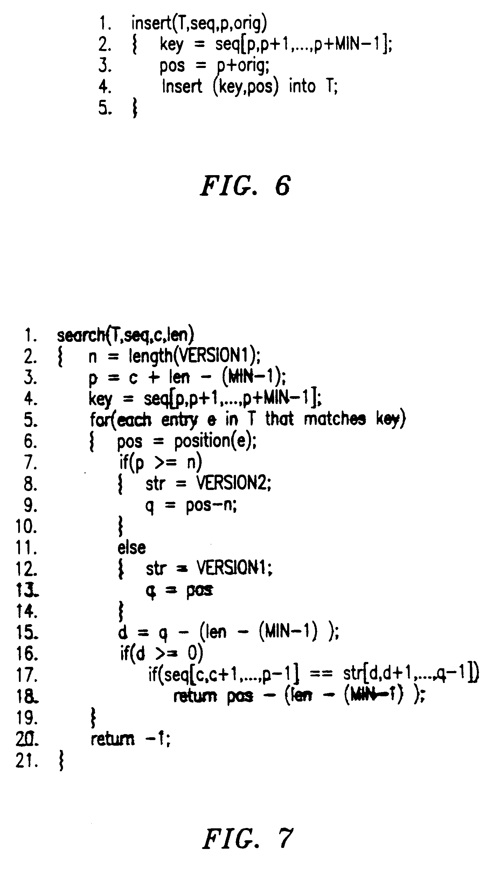

Figure 6 shows a procedure to insert a position into the table T. Line 2 of Figure 6 indicates that the key is the MIN bytes of the sequence "seq" starting at the position p. Line 3 constructs the coded position. Line 4 inserts the pair (key, pos) into the table T.

Figure 7 shows a procedure to search for a match. Lines 3 and 4 construct the search key, which consists of MIN-1 bytes at the end of the current longest match length, plus a new unmatched byte. Lines 5 to 19 try to extend the match length if possible. This is done by looking at every element of the table T that matches the constructed search key and seeing if the part of the current match left to the key position matches with the corresponding part of the element being considered. This test is carried out on line 17. If this is true, then search() returns the starting position of the match on line 18. Line 20 returns "-1" to indicate that there is no match longer than "len".

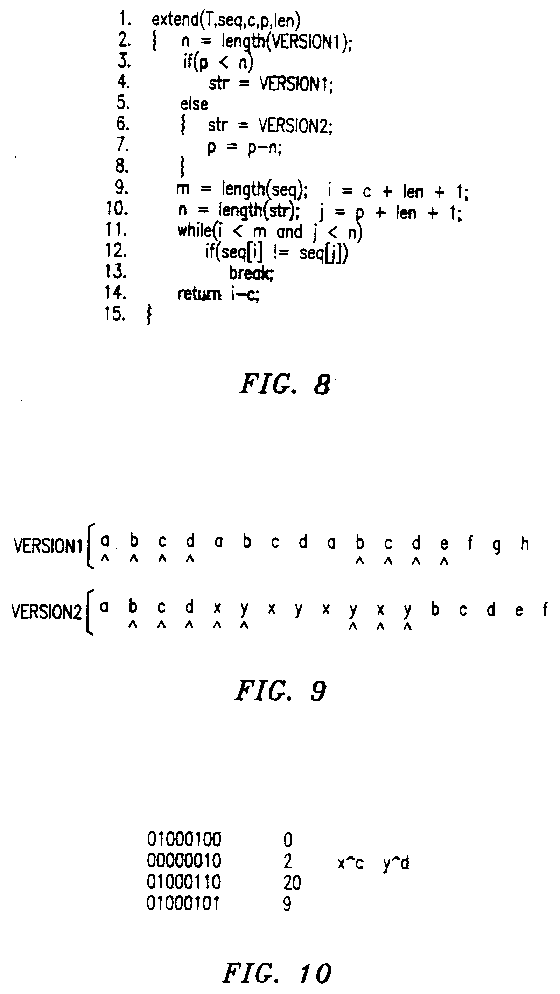

After the call to search() is successful on line 13 of Figure 5, the match length is now known to be at least 1 more than the "len" value in Figure 5. Figure 8 shows the extend() procedure, which extends the match to the right as far as possible. Lines 2 to 10 set up the correct sequences to search for matches. lines 11 to 13 perform the extension. line 14 returns the entire matched length.

When applied to the example of Figure 2, the above method will compute exactly the set of instructions exhibited in the same figure. Figure 6 shows the positions in the example VERSION1 and VERSION2 that would be inserted into table T.

### Security Enhancement

Given two versions, VERSION1 and VERSION2, and a computed transformation, only the ADD instructions in the transformation carry raw data from VERSION2. Such data can be utilized by a snooper to gain valuable information about VERSION2. In applications having high level of security requirements, to prevent leakage of information, the ADD instruction can be modified as follows. First, each ADD instruction is modified to also have a copying address which would be some position randomly selected from VERSION1 in such a way that the data segment starting at that position is at least as long as the length of the ADD data. If this is not possible, the ADD data can be broken into smaller units. Then, the raw data is xor-ed with data from such a selected segment of data before output to the transformation. For example, using the same ADD instruction in Figure 2, if the selected position in VERSION1 was 2, then this position would be output immediately after the control byte, and the two data bytes "xy" would be xor-ed with the two bytes "cd" before output.

On decoding, the same xor operation must be done to each data byte before outputting. This works because the mathematical property of xor guarantees that when a byte is xor-ed twice with another same byte, it retains its original value. However, we can now guarantee that a snooper will not be able to gain any information from the transformed data bytes unless he or she already has a copy of VERSION1, which was assumed to be secure.

Figure 7 shows the instruction of Figure 4 encoded using this more secure method. The ADD instruction now has a position 2. The data bytes "x" and "y" are shown being xor-ed with "c" and "d" respectively.

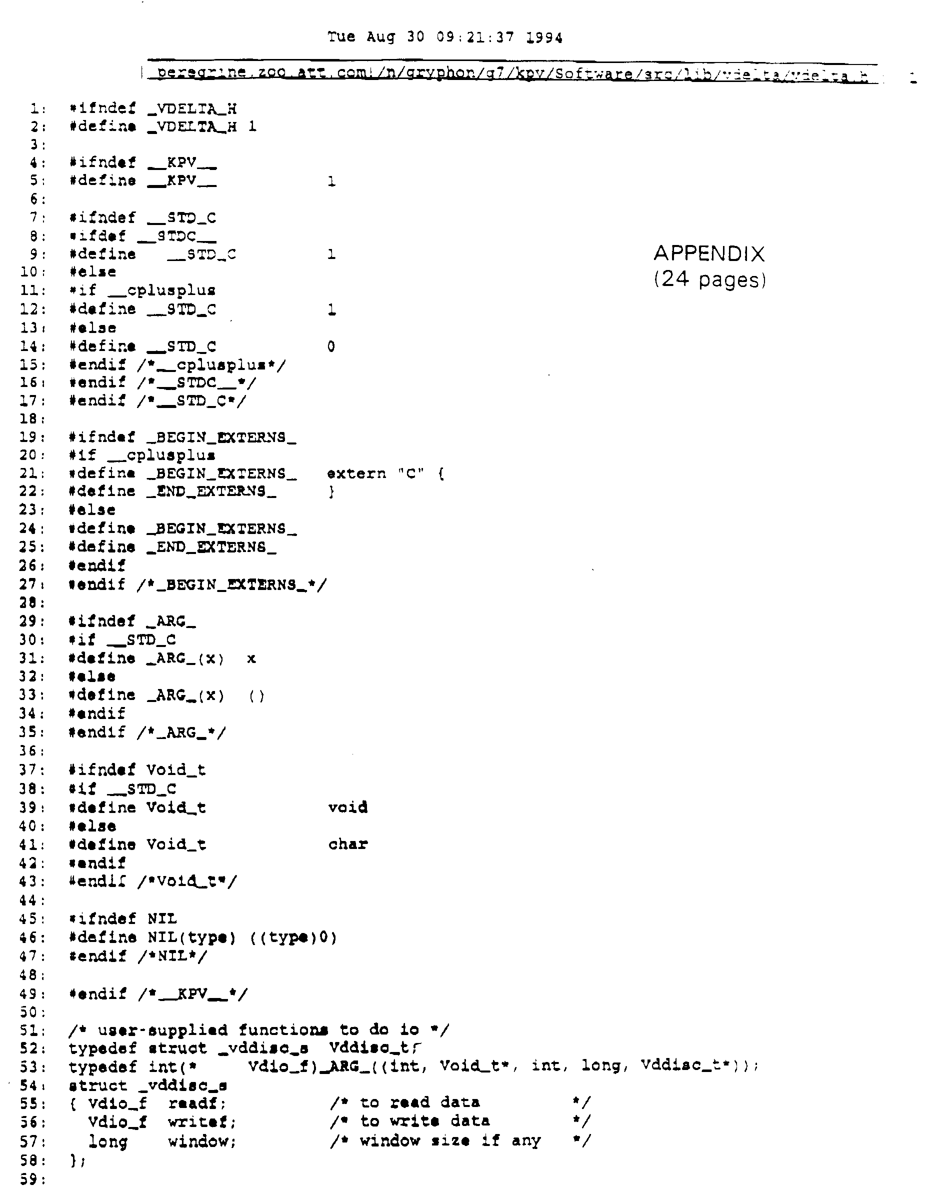

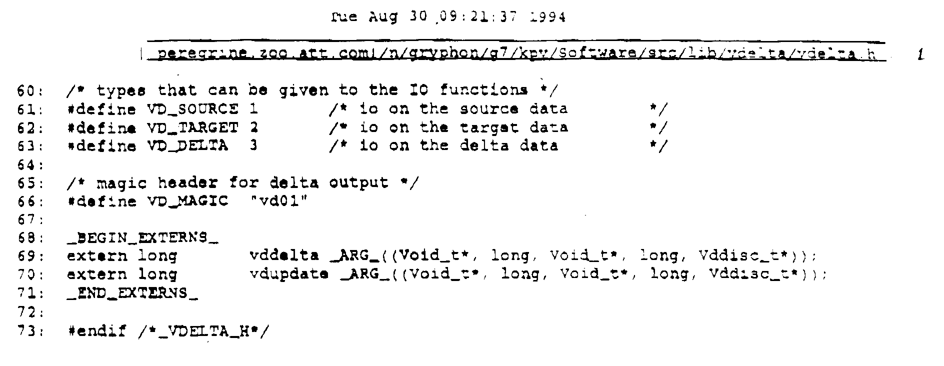

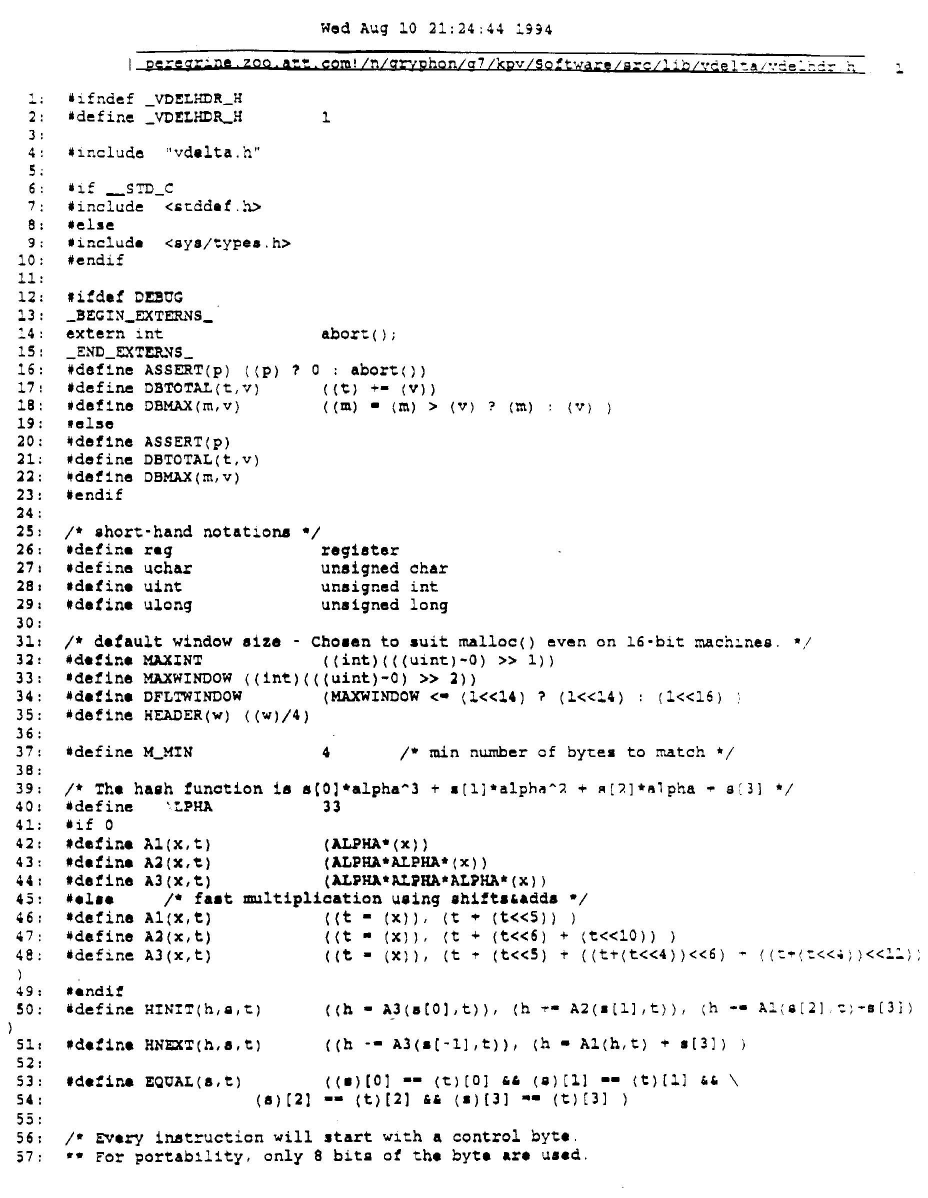

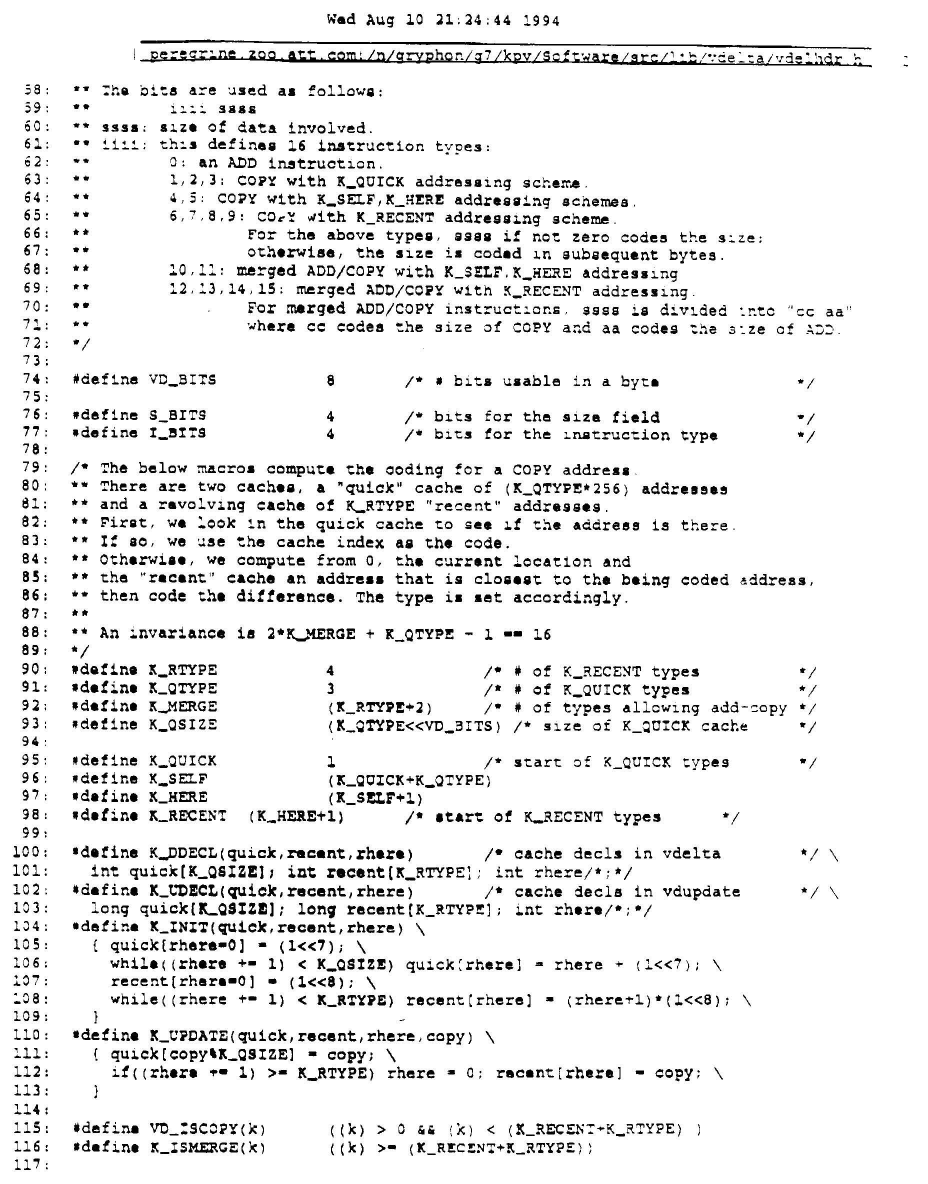

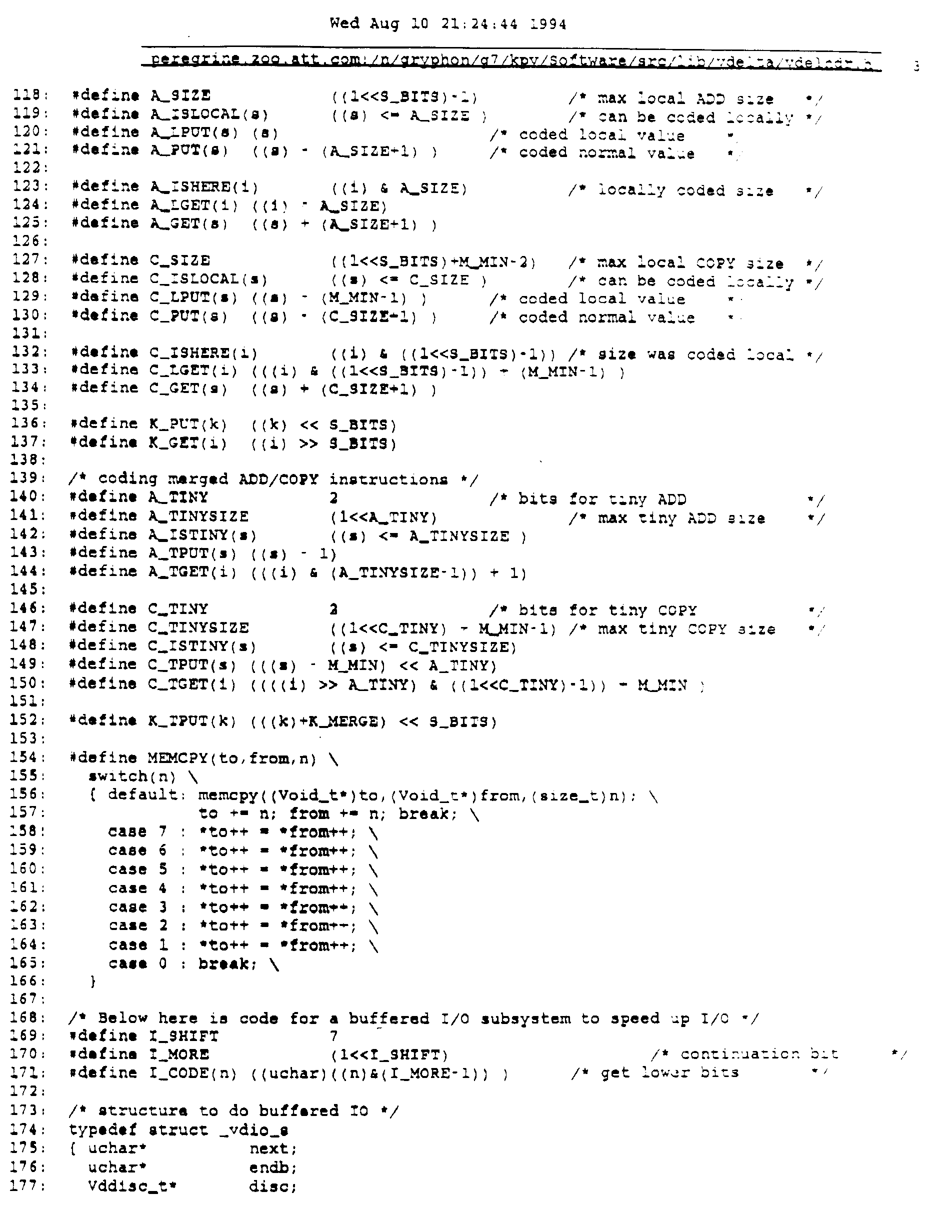

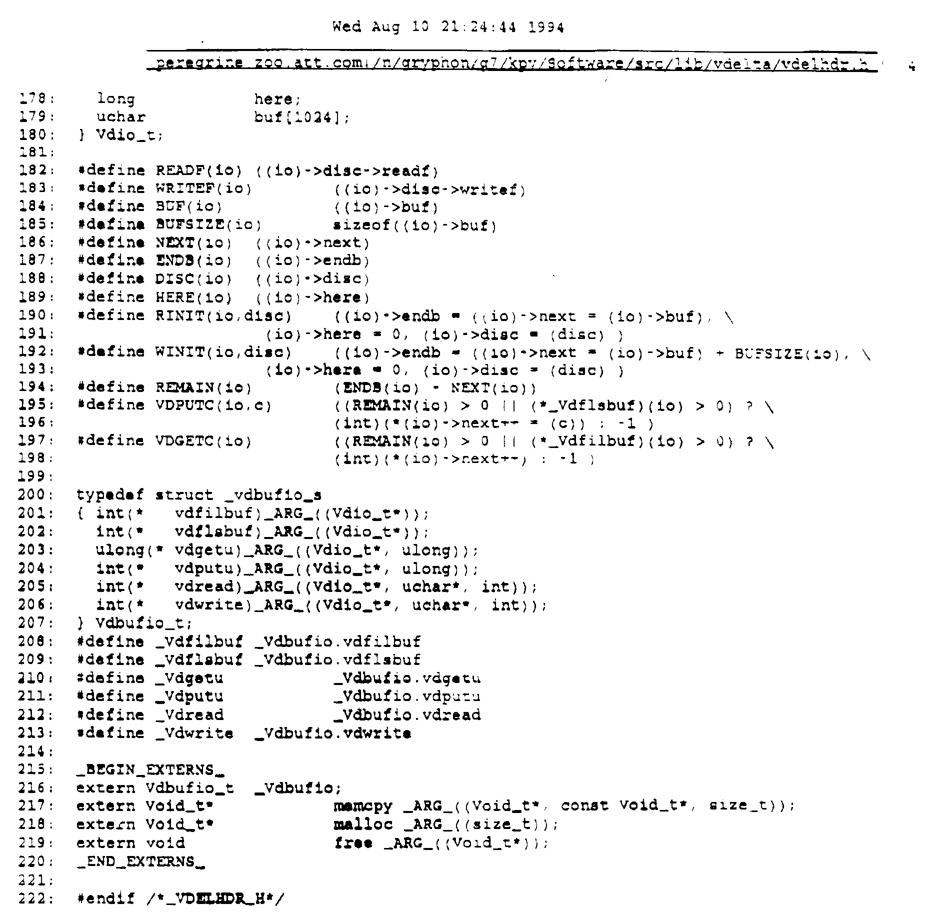

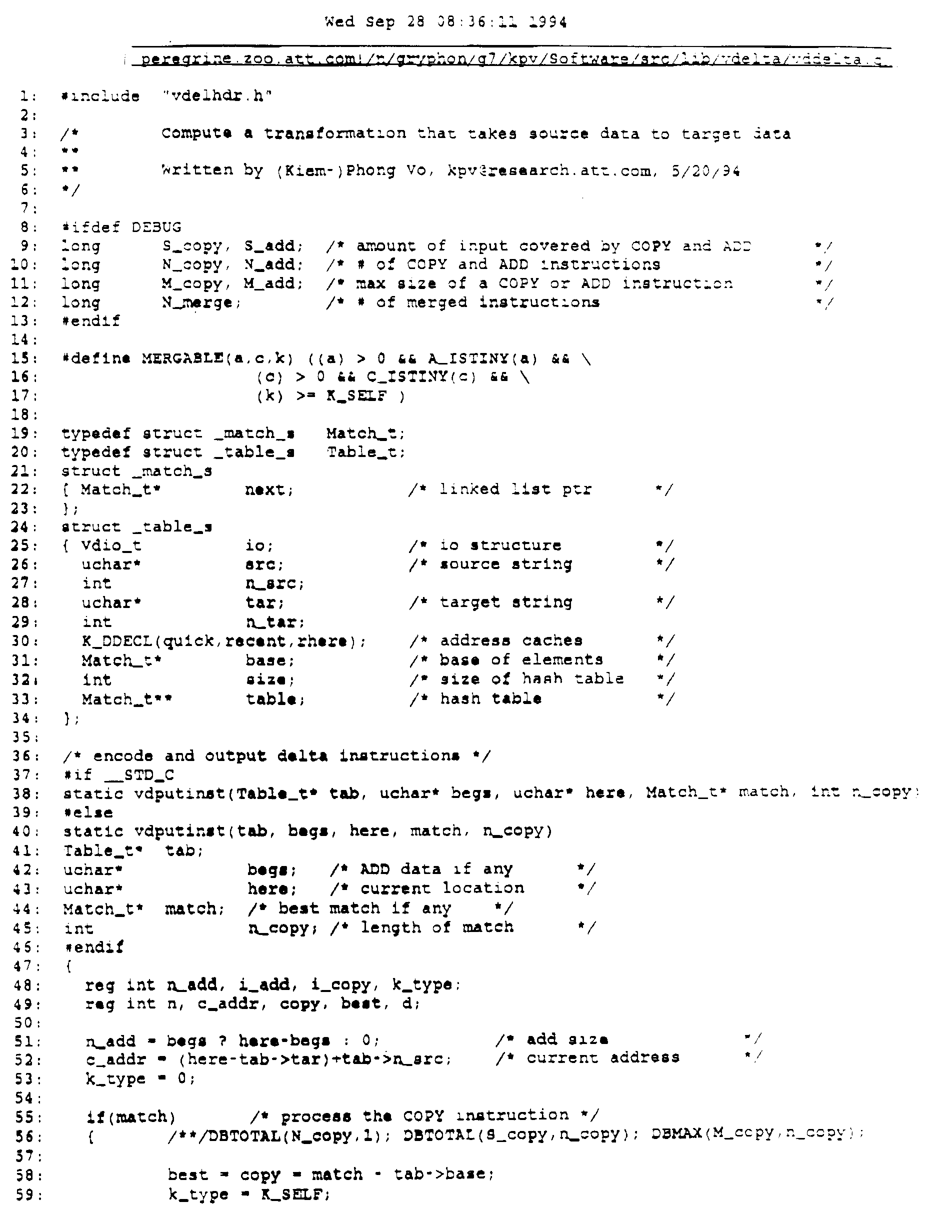

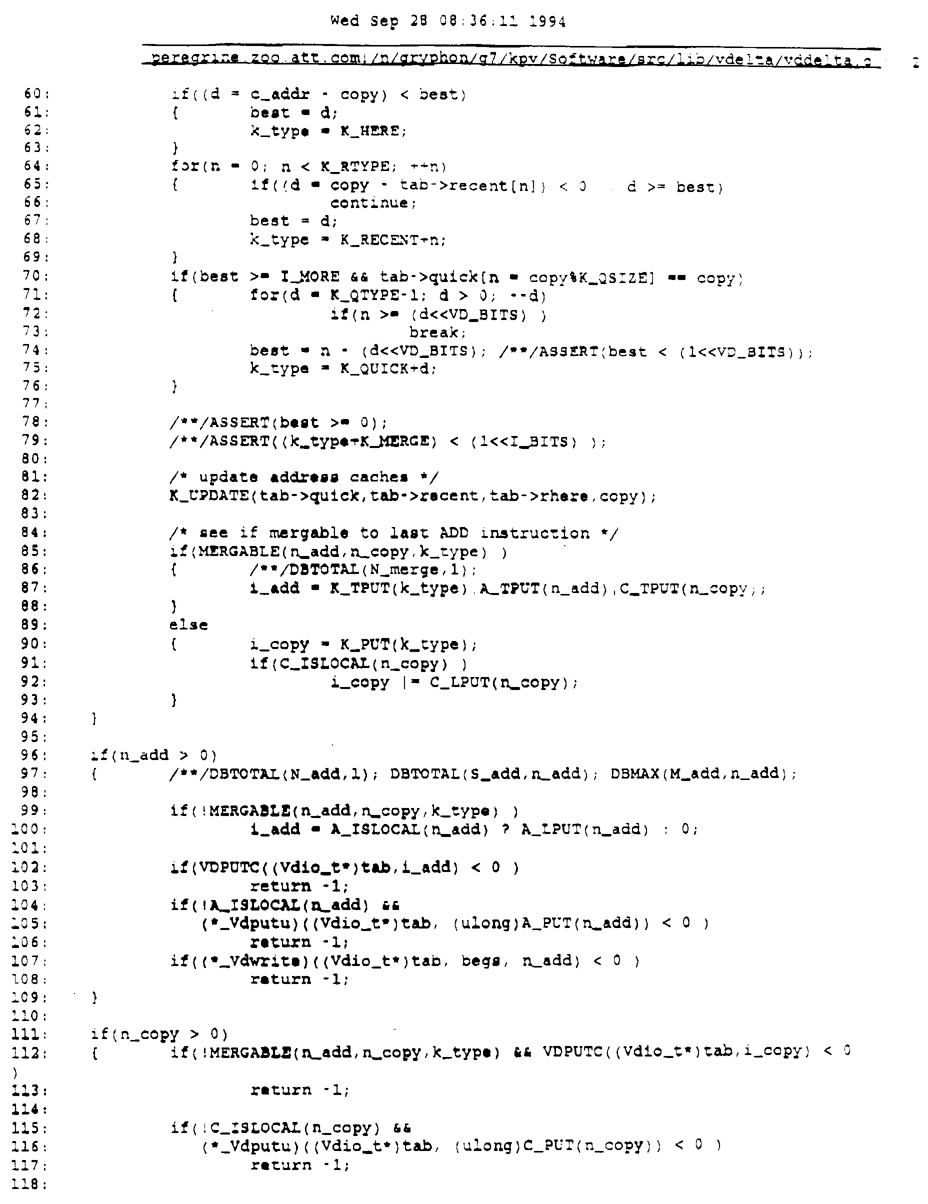

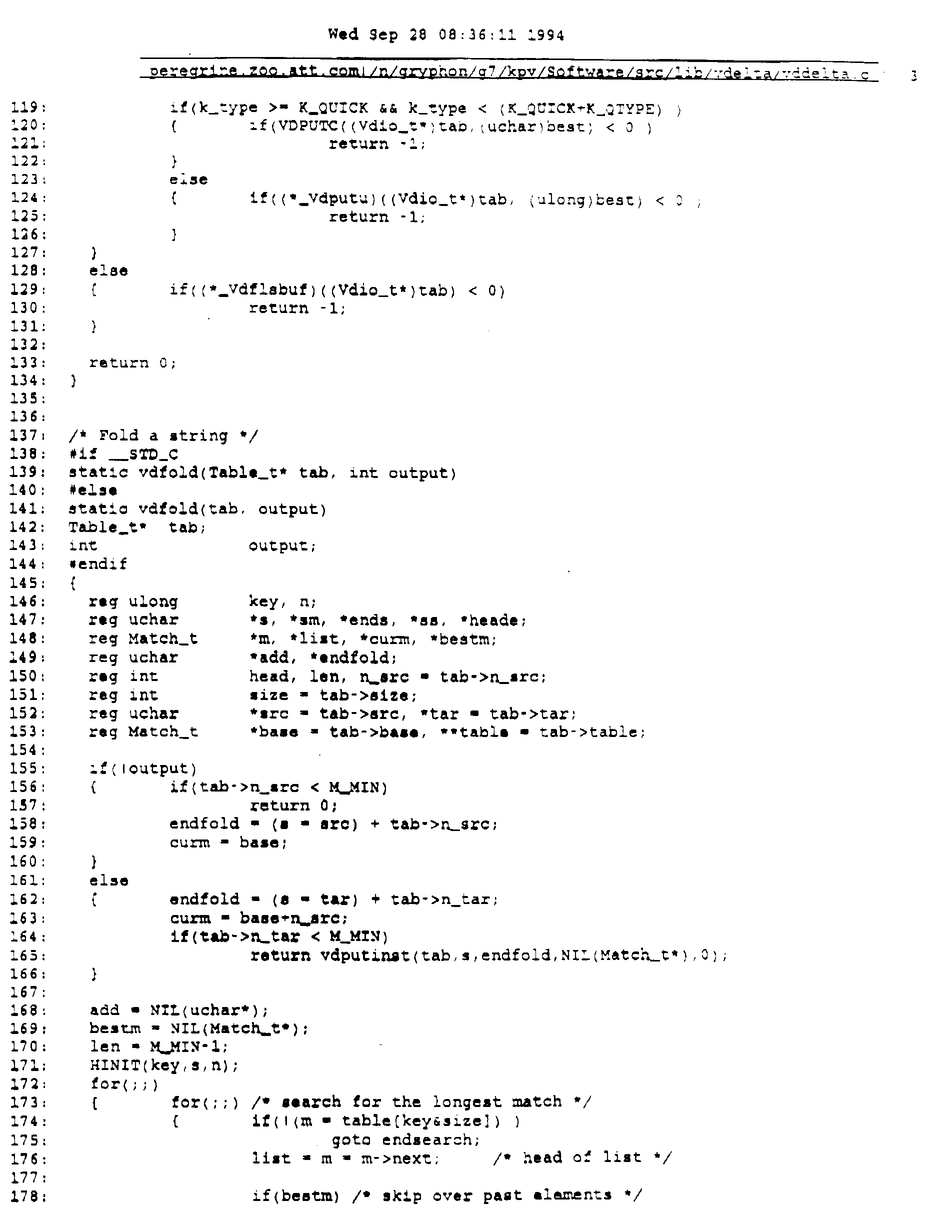

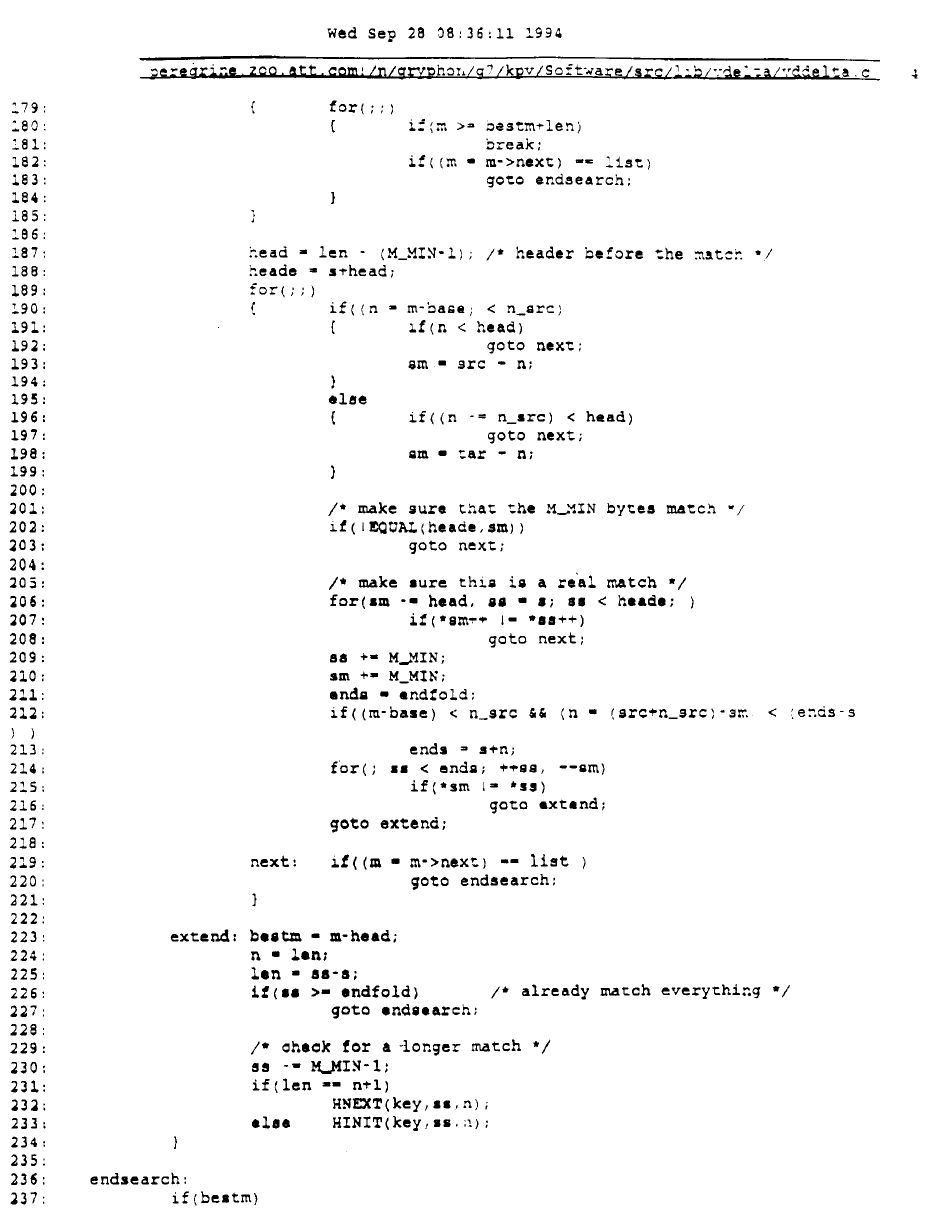

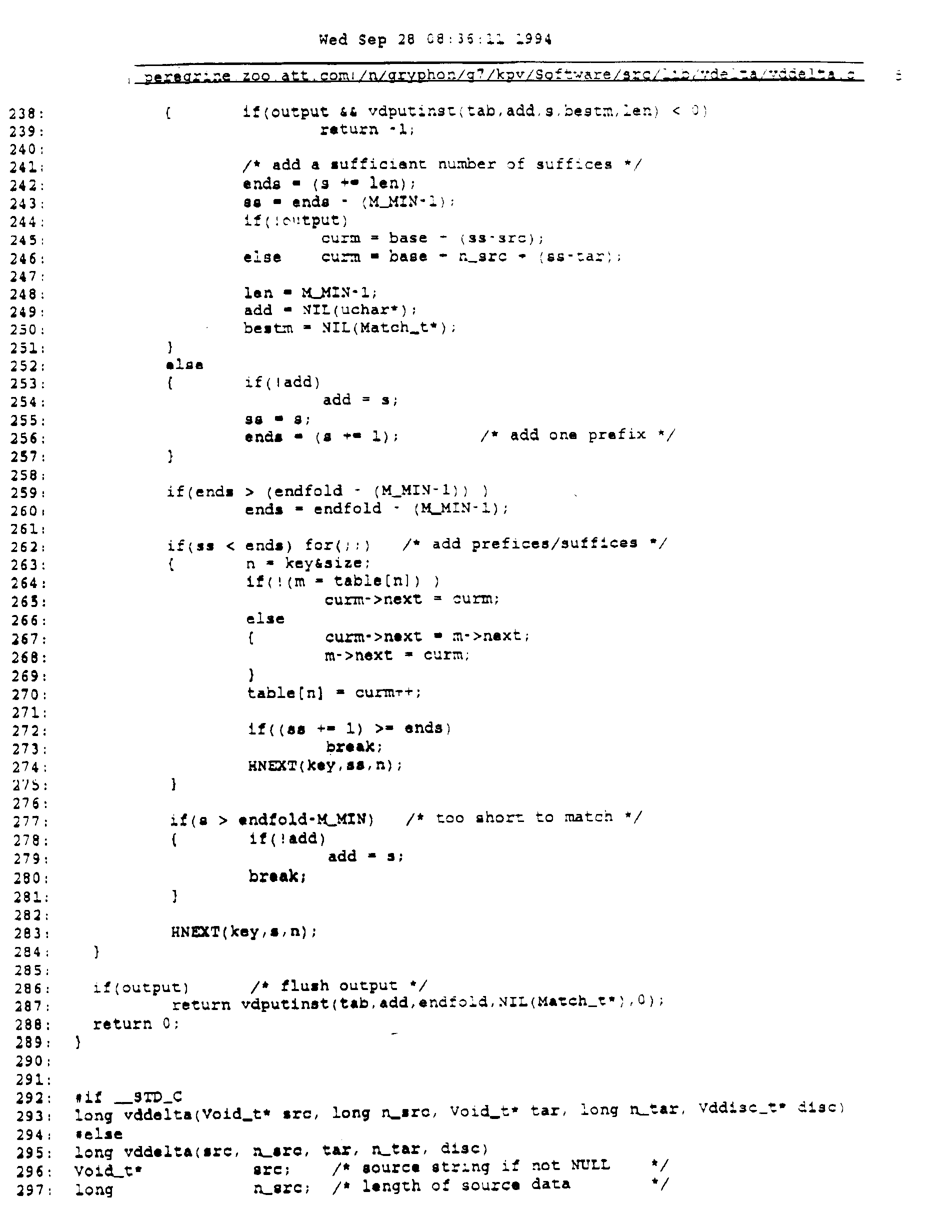

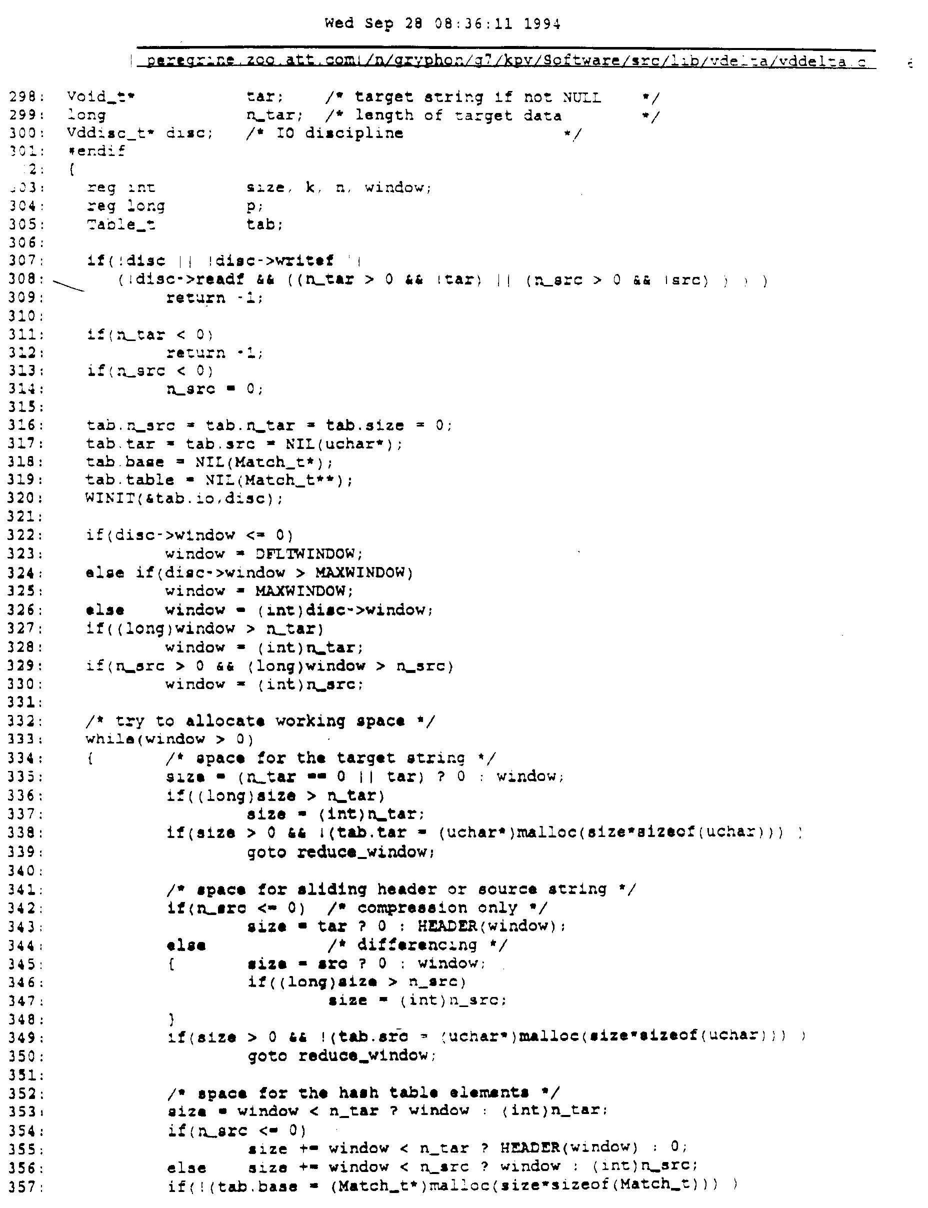

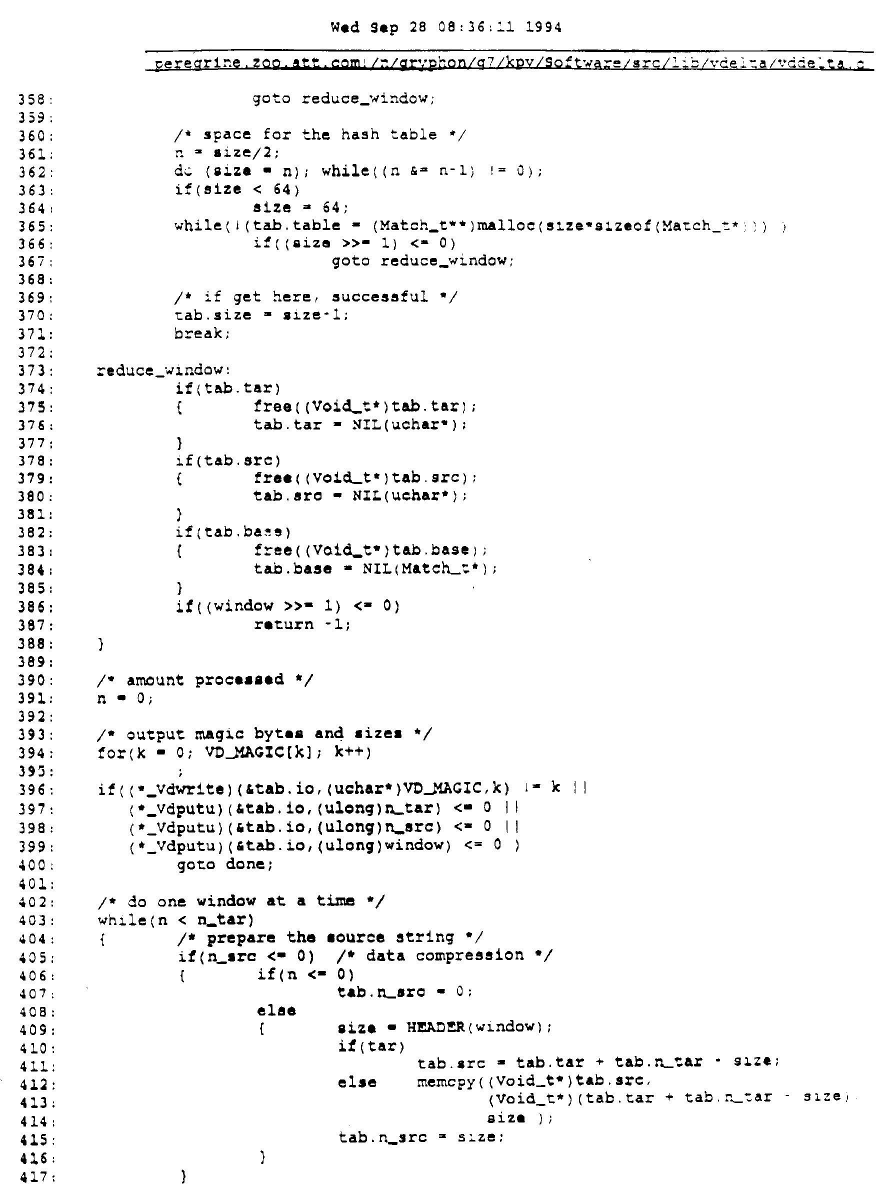

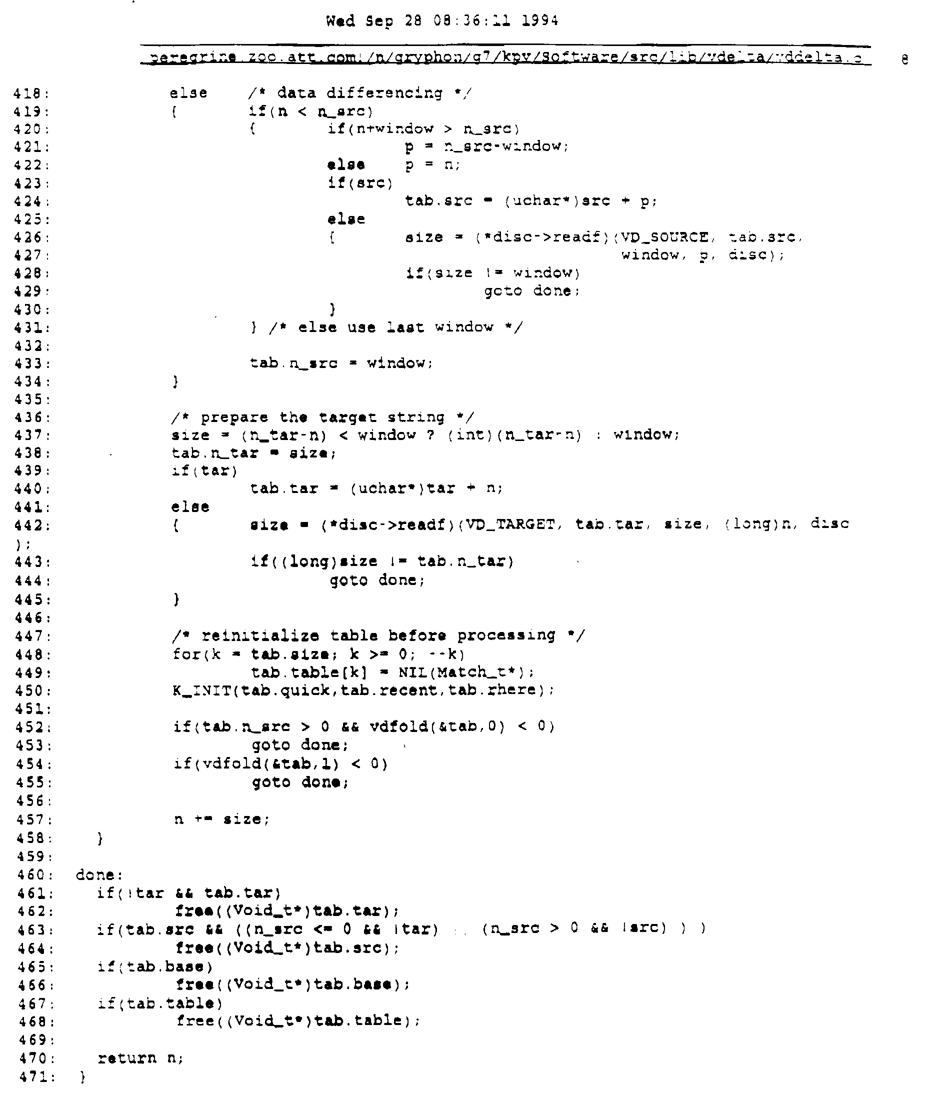

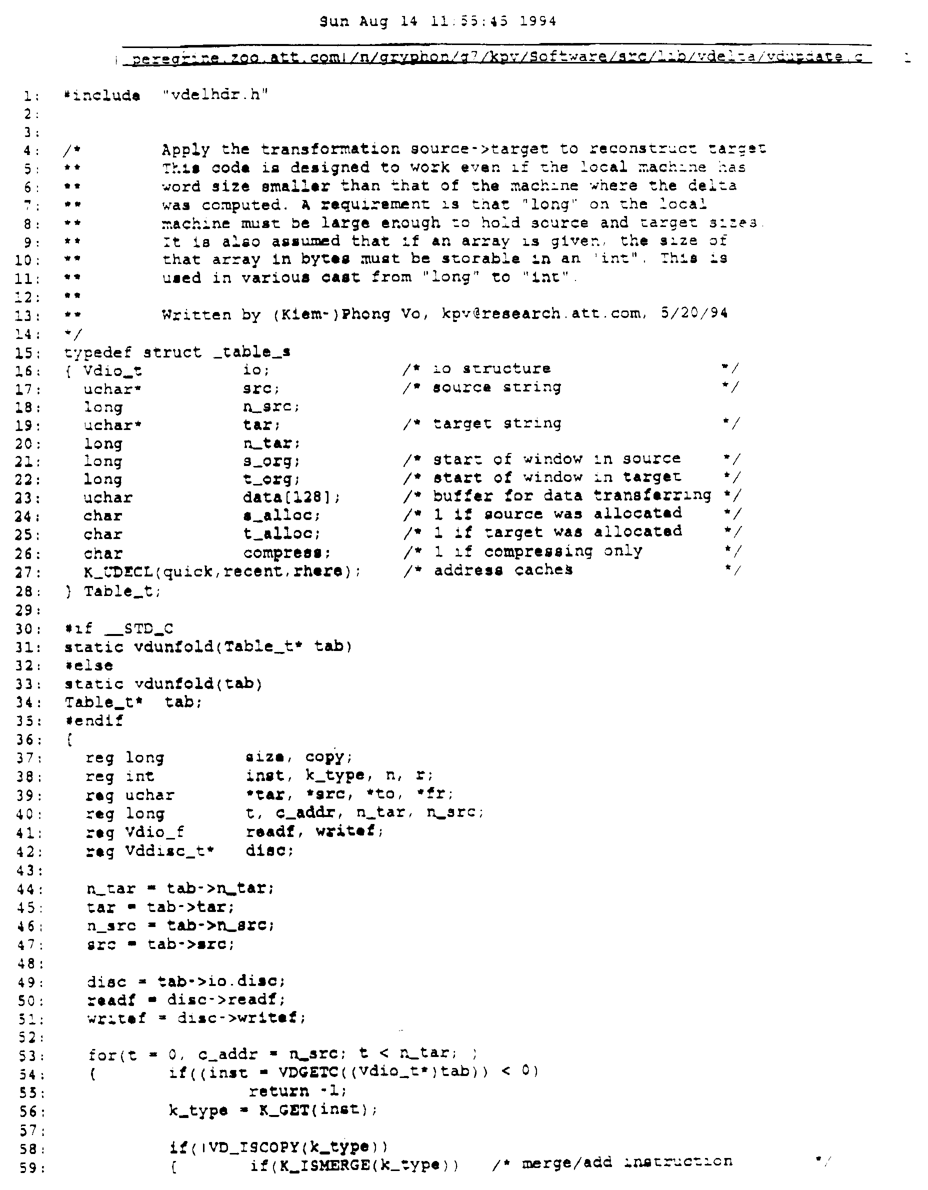

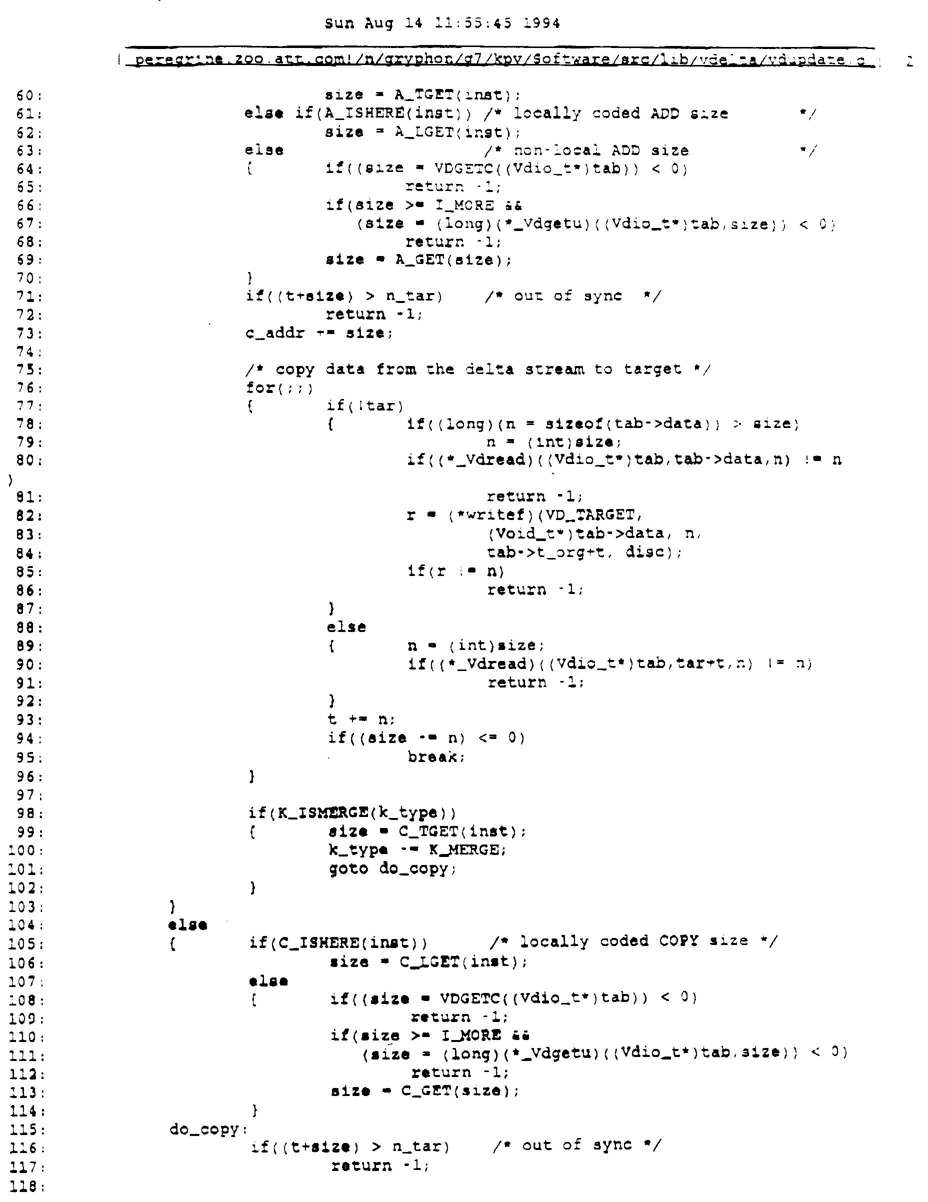

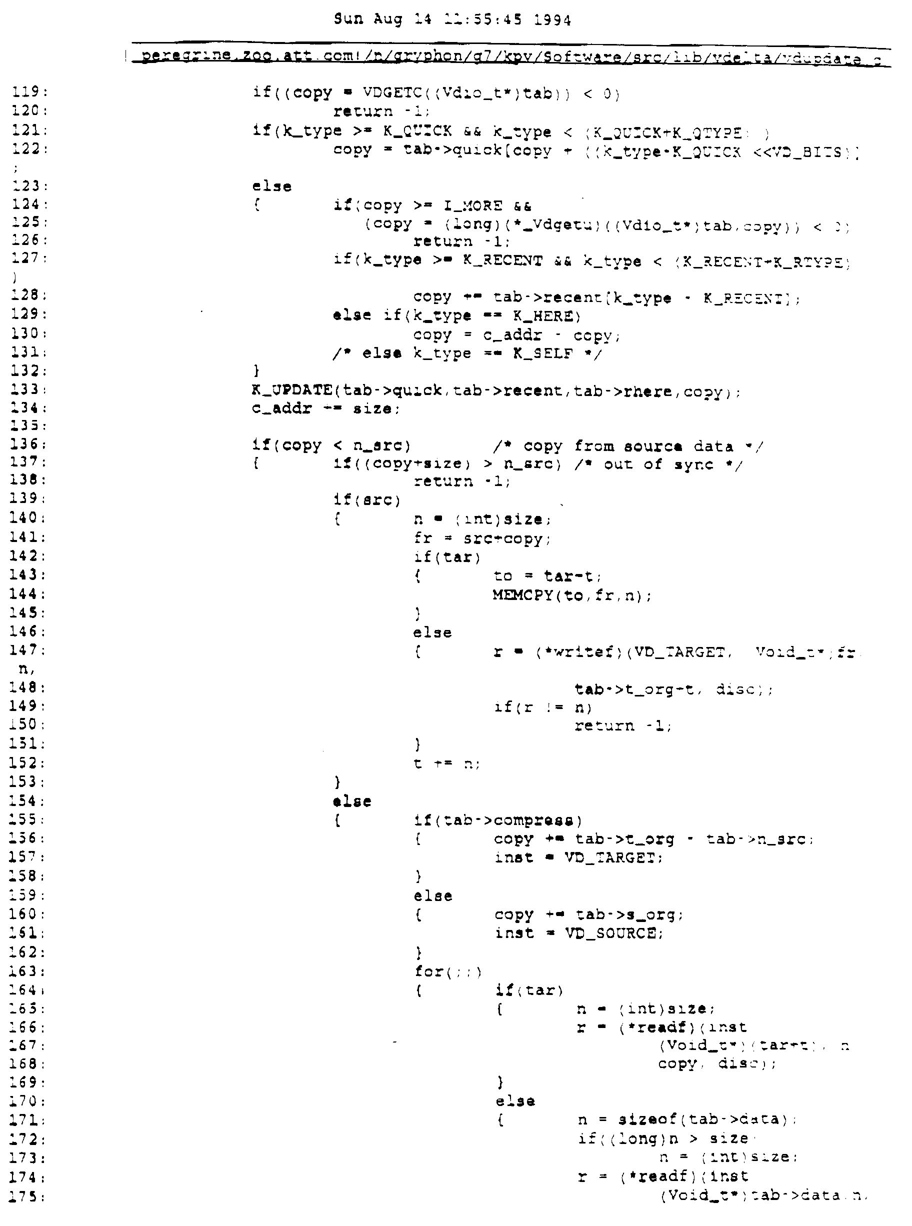

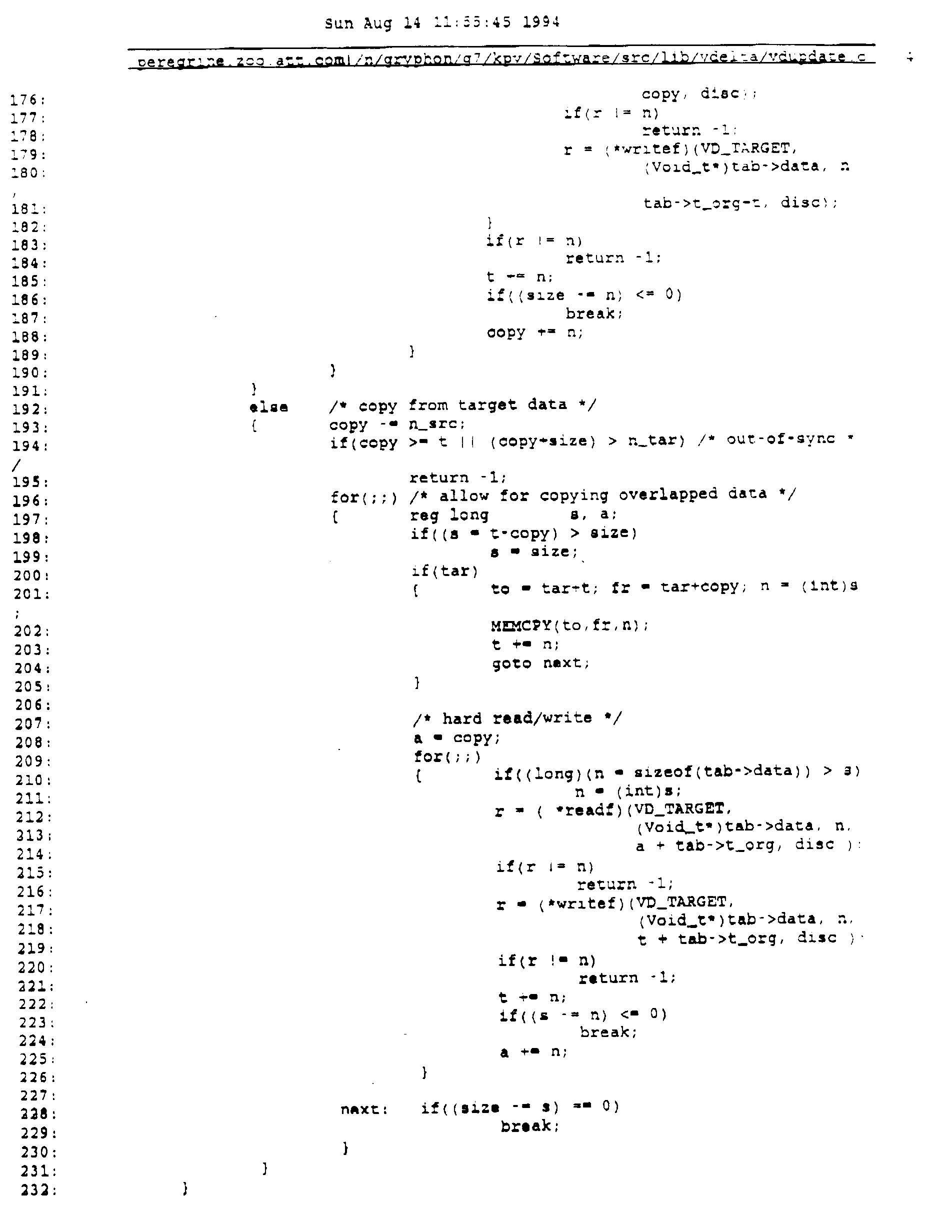

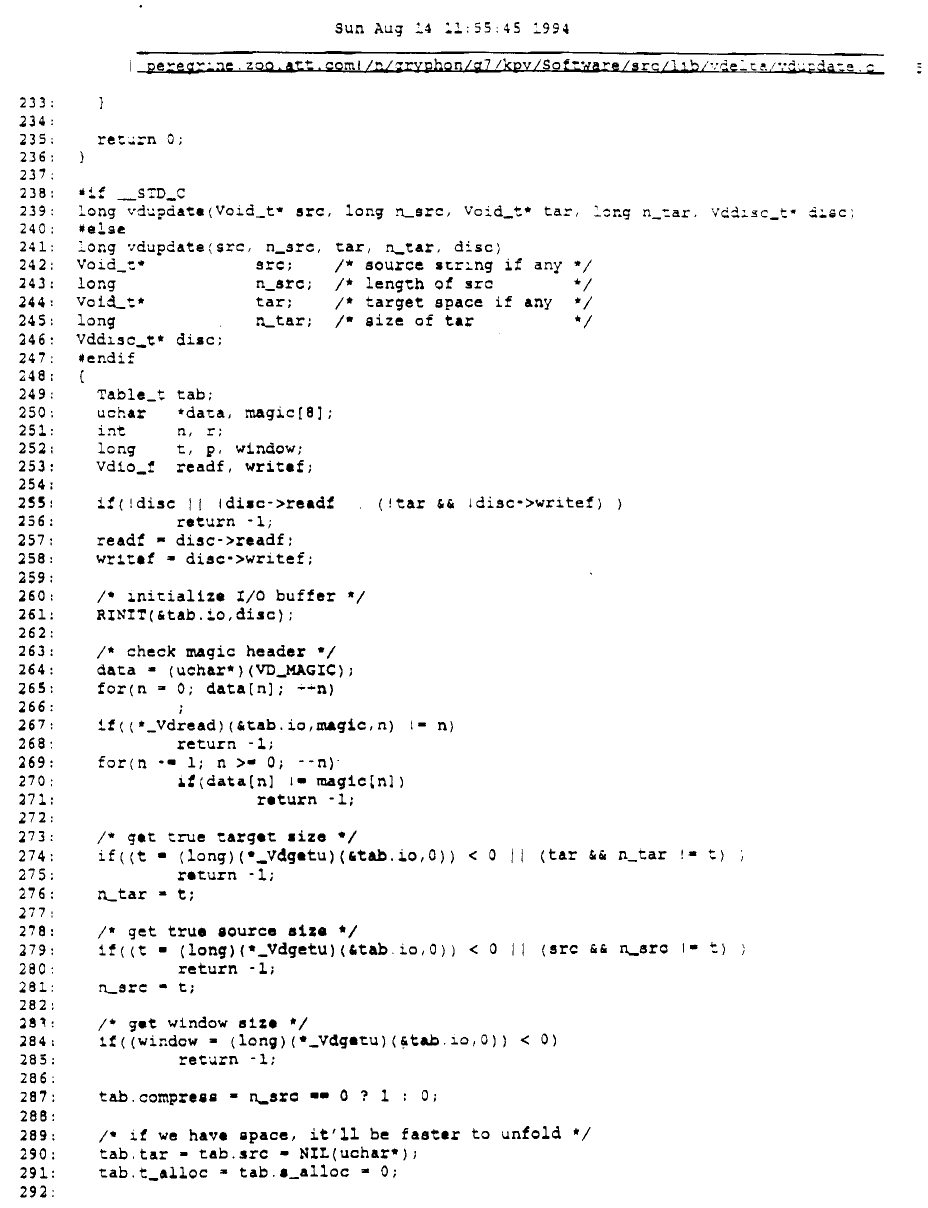

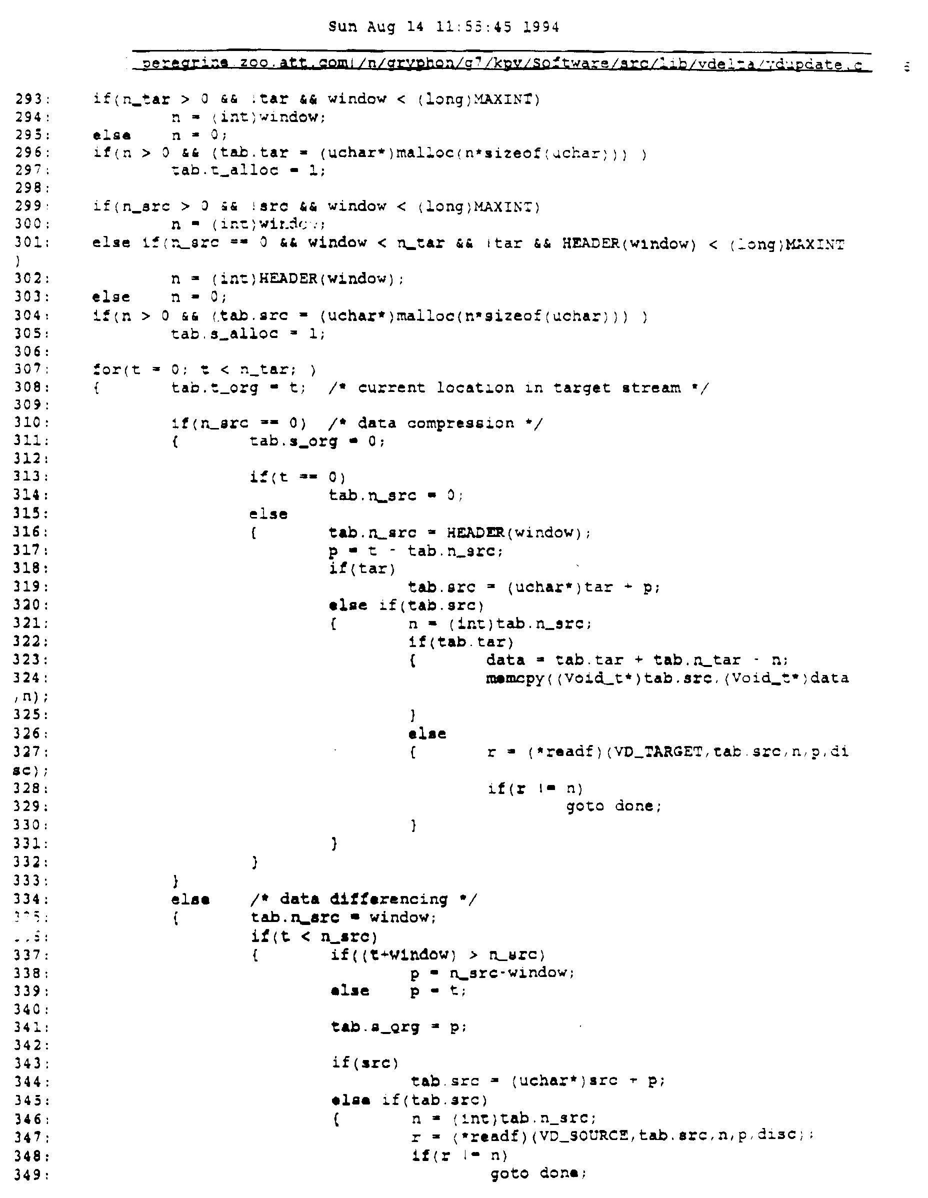

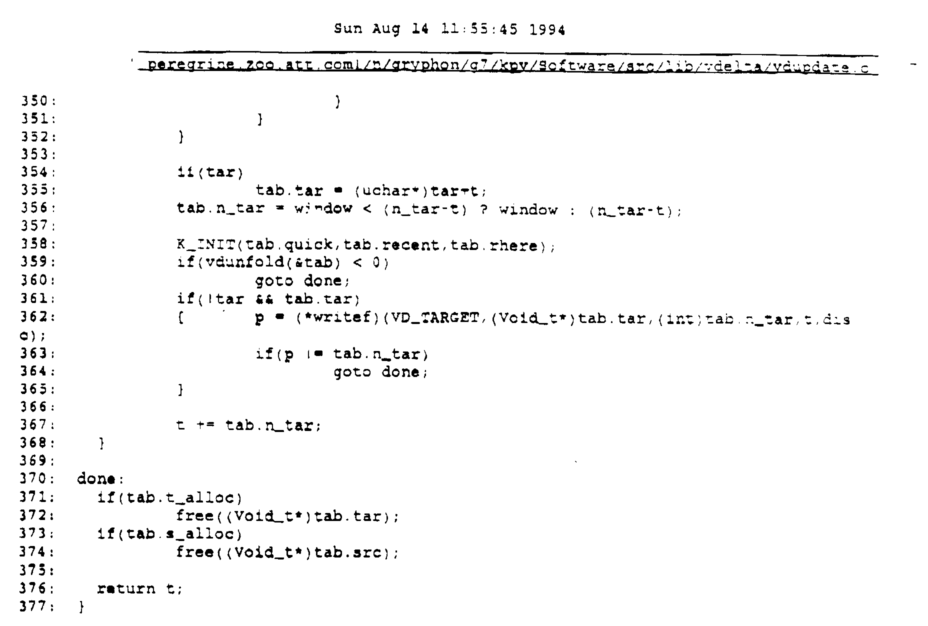

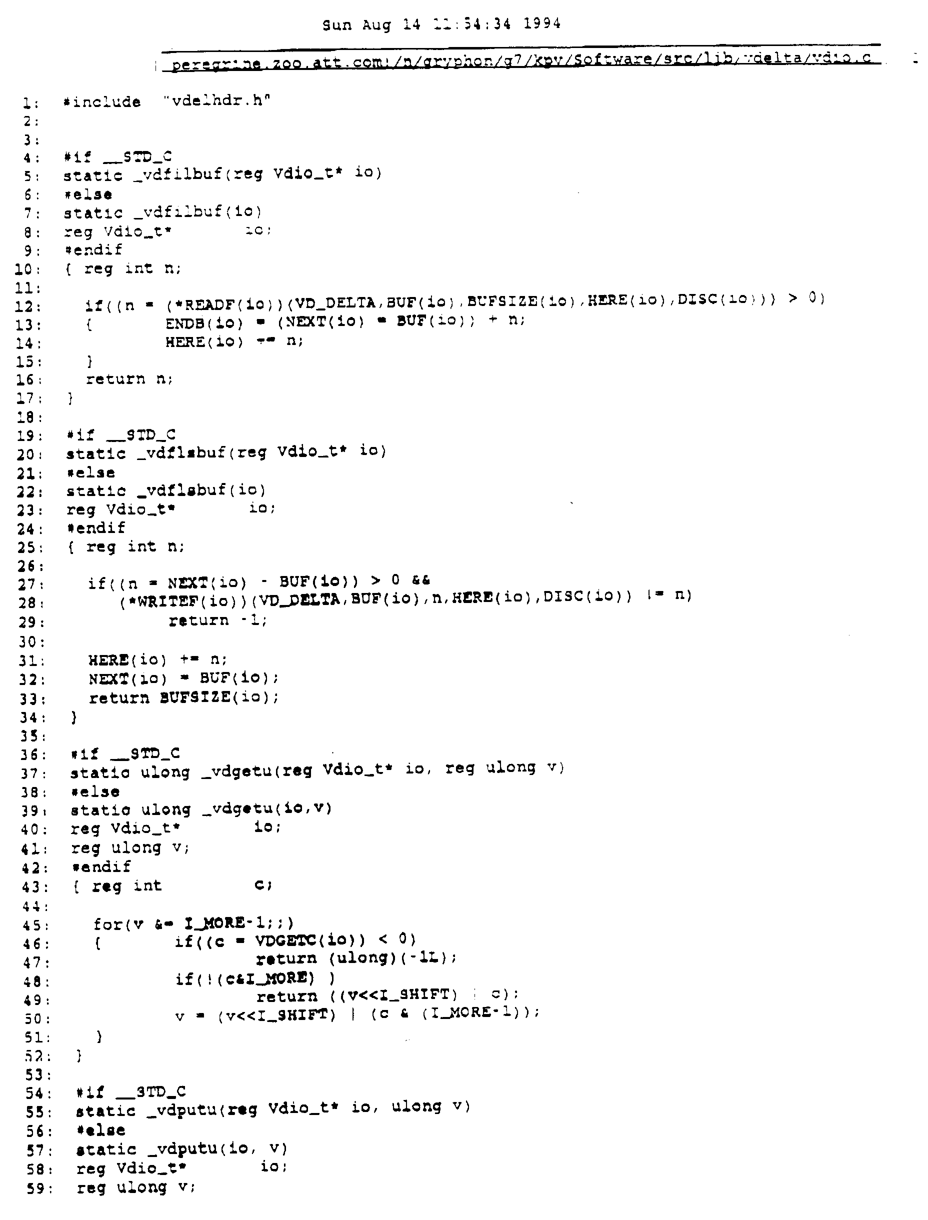

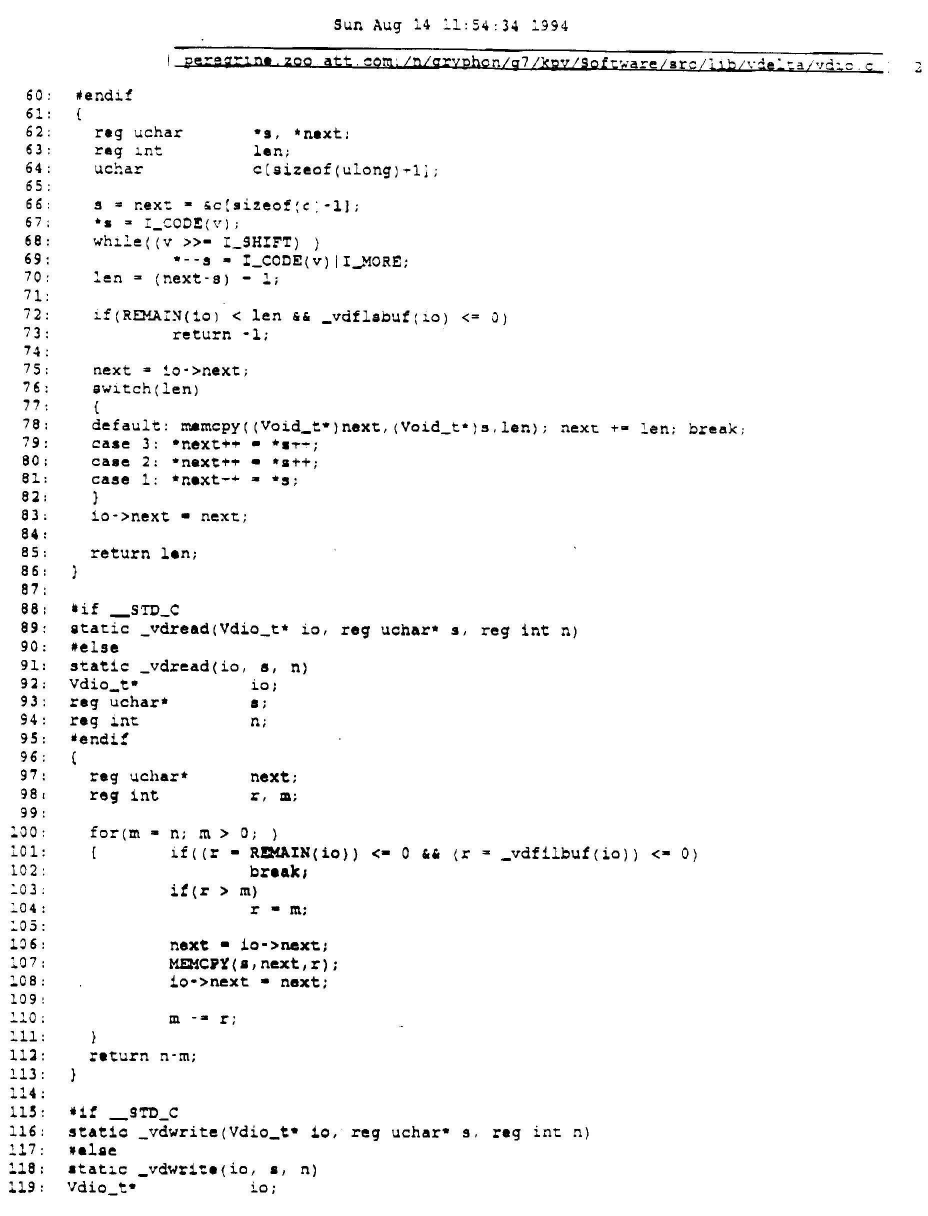

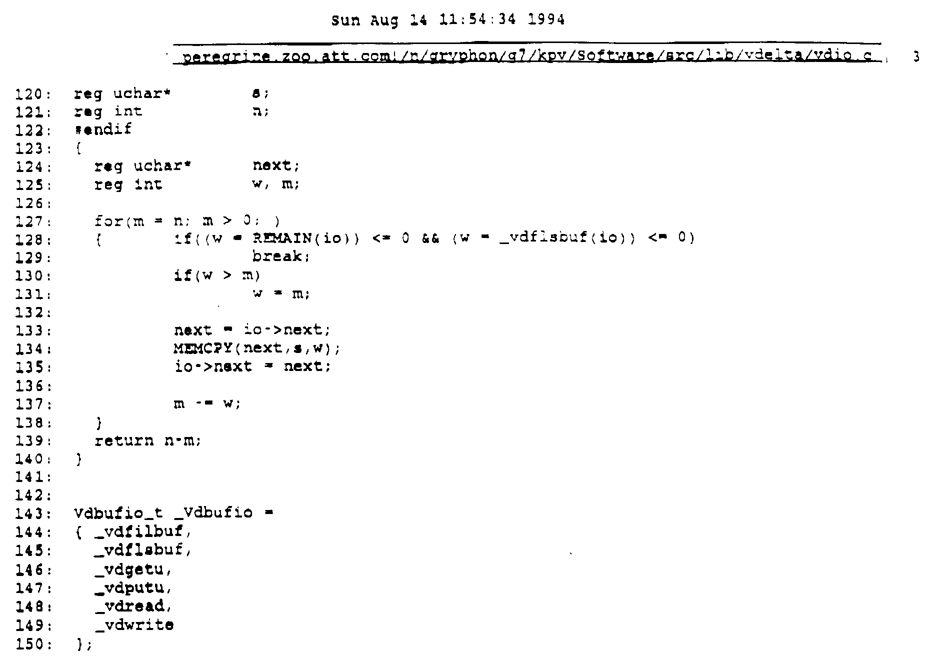

## Claims

1. In a computer, the improvement comprising:
a) program means for producing instructions which allow replication of a second version of a binary file, based on a first version, without access to the second version.

2. A method of replicating a second version of a binary file, which is derived from a first version, comprising the following steps:
a) creating a sequence of instructions, each of which generates a character sequence, which, when concatenated, replicate the second version; and
b) executing the instructions.

3. For a digital computer, the improvement comprising:
a) first program means for
i) examining a first and a second file and
ii) producing a sequence of instructions which, when executed, concatenate
A) parts of the first file with
B) parts of the second file, without access to the second file,
in order to replicate the second file.

4. The improvement according to claim 3, and further comprising second program means for executing the sequence of instructions, for replicating the second file.

5. A method of saving a later version of a computer file, comprising the following steps:
a) comparing the later version with an earlier version, and identifying
i) similar passages, where the later version is similar to the earlier version, and
ii) difference passages, where the later version is different from the earlier version;
b) storing the address where each similar passage occurs in the earlier version; and
c) storing each difference passage, together with the address of its occurrence in the later version.

6. A process of information replication, comprising the following steps:
a) finding, at a first site,
i) similarities and
ii) differences
between a first file and a second file;
b) maintaining, at a second site, a copy of the first file;
c) transmitting the following to the second site:
i) locations of the similarities,
ii) the differences themselves, and
iii) information to enable replication of the second file, based on (c)(i), (c)(ii), and the second file.

7. A method of updating an old version of a file into a new version, comprising the following steps:
a) receiving instructions which order one or more of the following to occur:
i) copying a specified part of the old version into a specified location of the new version;
ii) copying a specified part of the new version into a specified location of the new version; and
iii) adding specified bytes to a specified location in the new version;
and
b) executing the instructions.

8. A system for generating data indicative of differences between first and second versions of a file, comprising:
a) means for deriving a sequence comprising the following instructions:
i) a COPY instruction which orders that characters be copied from
A) a source location in either the first or second version, to
B) a destination location in the second version; and
ii) an ADD instruction which orders that specified characters be added to specified locations in the second version.
